(19) Europäisches Patentamt
European Patent Office
Office européen des brevets

(11) **EP 2 220 271 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(21) Anmeldenummer: **08857973.5**

(22) Anmeldetag: **04.12.2008**

(51) Int Cl.:
*H01M 8/02* (2006.01)    *H01M 8/24* (2006.01)
*H01M 8/04* (2006.01)    *H01M 4/86* (2006.01)
*H01M 4/64* (2006.01)    *H01G 11/00* (2013.01)
*H01G 11/22* (2013.01)

(86) Internationale Anmeldenummer:
**PCT/EP2008/010272**

(87) Internationale Veröffentlichungsnummer:
**WO 2009/071292 (11.06.2009 Gazette 2009/24)**

(54) **ELEKTROCHEMISCHES ENERGIEUMWANDLUNGSSYSTEM**

ELECTROCHEMICAL ENERGY CONVERSION SYSTEM

SYSTÈME DE CONVERSION D'ÉNERGIE ÉLECTROCHIMIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.12.2007 DE 102007058837**

(43) Veröffentlichungstag der Anmeldung:
**25.08.2010 Patentblatt 2010/34**

(73) Patentinhaber: **Wenzl, Heinz**
**37520 Osterode (DE)**

(72) Erfinder:
• **STAGGE, Hanno**
**50679 Köln (DE)**
• **BENGER, Ralf**
**37539 Windhausen (DE)**
• **BECK, Hans-Peter**
**38640 Goslar (DE)**

(74) Vertreter: **Rebbereh, Cornelia et al**
**Kölner Strasse 16**
**51789 Lindlar (DE)**

(56) Entgegenhaltungen:
WO-A-01/34424          DE-A1- 10 151 601
DE-A1-102005 046 423   DE-B4- 10 392 974
FR-A1- 2 665 585       JP-A- 2008 243 728

EP 2 220 271 B1

**Beschreibung**

Die Erfindung betrifft ein elektrochemisches Energieumwandlungssystem mit zumindest einer elektrisch leitenden Komponente mit zumindest zwei in Reihe geschalteten Zellen.

Als elektrochemische Energieumwandlungssysteme werden insbesondere elektrometallurgische und galvanische Anlagen, Elektrolyseanlagen, Batterien, Doppelschichtkondensatoren und Brennstoffzellen bezeichnet, bei denen Strom in Elektronen und Ionen leitenden Komponenten wie z.B. Endplatten, Bipolarplatten, Elektrolyt, Gasdiffusionsschichten, etc. fließt, die große Querschnitte aufweisen. Die Stromverteilung ist dabei selbst unter stationären oder quasistationären Bedingungen sehr inhomogen. Simulationen und Messungen zeigen übereinstimmend, dass die örtliche Stromdichte innerhalb der Komponenten bei normalen Betriebsbedingungen um mehr als den Faktor 2 von einem Durchschnittswert abweichen kann, wie in Sauer, Sanders: "Ortsaufgelöste Strom-, Temperatur- und Potentialmessung und Modellierung in BZ als Basis für Alterungsmodelle, Workshop Lebensdauerprognose von Brennstoffzellen", Ulm, Deutschland, 2007, Freunberger, Reum, Evertz, Wokaun, Büchi: "Measuring the current distribution in PEFCs with Sub-Millimeter resolution", Journal of the Electrochemical Society, 153, 2006, und in Brett, Atkins, N.P. Brandon, Vasileiadis, Vesovic, A.R. Kucernak: "Membrane resistance and current distribution measurements under various operating conditions in a polymer electrolyte fuel cell", Journal of Power Sources 172, 2007 offenbart. Diese Stromverteilungsinhomogenitäten beruhen auf geringfügigen Unterschieden der elektrischen Widerstände der einzelnen Komponenten, wie z.B. geringfügigen Dickenunterschieden, Übergangswiderständen, wie z.B. lokalen Unterschieden im Anpressdruck zwischen zwei Elektroden, der jeweiligen die Ruhespannung verändernden Konzentration der Reaktionspartner am Reaktionsort und lokalen Materialinhomogenitäten. Die lokale Konzentration der Reaktionspartner bzw. Reaktanden, wie bei Elektrolyseanlagen, elektrometallurgischen und galvanischen Anlagen, Batterien und Redox-Flow-Zellen, bzw. Brennstoffe, wie bei Brennstoffzellen, beeinflusst die jeweilige lokale Spannungshöhe. Zum Ausgleich der Spannungsunterschiede fließen im Ruhezustand interne Ausgleichsströme innerhalb der elektrochemischen Energieumwandlungssysteme, die an deren Anschlussklemmen nicht gemessen werden können.

Es haben sich ferner Phänomene gezeigt, die sowohl bei Brennstoffzellen als auch bei Batterien auftreten und die auf Ringströme innerhalb einer Elektrode oder zwischen zwei Elektroden hindeuten, da bei Spannungsunterschieden in verschiedenen Bereichen der Elektrode die Stromrichtung unterschiedlich sein kann. Bei Batterien wird ein Bereich der Elektrode durch Entladung eines anderen Bereichs geladen, bei Brennstoffzellen werden Bereiche der Elektrode mit einem Strom in falscher Richtung durchflossen und dabei stark geschädigt, wie in Johnson, Gemmen: "Effect of load transients on SOFC operation - current reversal on loss of load", Power Sources 144, 2005, offenbart.

Bei einem Stromfluss durch das elektrochemische Energieumwandlungssystem und externe Lasten oder Ladegeräte führen die unterschiedlichen lokalen Spannungen zu deutlich unterschiedlichen lokalen Stromdichten. Unterschiede in der Stromdichte führen zu Unterschieden in der Wärmeerzeugung, die wegen der bei bekannten elektrochemischen Energieumwandlungssystemen konstruktiv bedingten schlechten Wärmeableitung aus dem Inneren der elektrochemischen Energieumwandlungssysteme zu erheblichen Temperaturunterschieden innerhalb von diesen führen können. Die Temperaturunterschiede wirken auf die Stromverteilung zurück, da die elektrochemische Spannungsquelle und einige der elektrisch leitenden Materialien von elektrochemischen Energieumwandlungssystemen eine ausgeprägte und teilweise auch nichtlineare Abhängigkeit des elektrischen Widerstands von der Temperatur aufweisen. Alterungsprozesse z.B. der Mikrostruktur und der chemischen Zusammensetzung der Materialien der elektrochemischen Energieumwandlungssysteme hängen stark von der Temperatur und der Stromdichte an der jeweiligen Stelle innerhalb des elektrochemischen Energieumwandlungssystems ab. Eine inhomogene Strom- und Temperaturverteilung führt somit zu örtlich unterschiedlichen Alterungsgeschwindigkeiten und einer Begrenzung der Leistungsfähigkeit des elektrochemischen Energieumwandlungssystems, weil in Bereichen mit geringer Temperatur- und Strombelastung nicht die vollen Leistungsreserven genutzt werden können und die Gesamtleistung auf maximal zulässige örtliche Temperatur- und Stromdichtewerte in den Bereichen mit der höchsten Temperatur- und Strombelastung abgestimmt werden muss.

Bei allen elektrochemischen Energieumwandlungssystemen, bei denen lokal unterschiedliche Konzentrationen der Reaktanden auftreten können oder aus anderen Gründen keine ausreichende Stromhomogenität über die Elektrodenfläche gegeben ist, ist es bekannt, konstruktive Gegenmaßnahmen zu ergreifen. Bei Nickel-Metallhydrid(NiMH)-Batterien für Hybridfahrzeuge ist es beispielsweise bekannt, die Elektroden an mehreren Stellen zu kontaktieren, um den Stromfluss zu vergleichmäßigen. Bei Bleibatterien, bei denen der Elektrolyt zugleich auch einen der Reaktanden enthält, wird z.B. die Konzentration des Elektrolyten mechanisch gemischt.

Im Folgenden wird zunächst auf elektrochemische Energieumwandlungssysteme in der allgemeinen Struktur eines Bipolarsystems, insbesondere in Form von Brennstoffzellen, eingegangen.

Bei Brennstoffzellen und Redox-Flow-Zellen ist es bekannt, das Strömungsfeld ("Flowfield") zu optimieren, damit die Konzentration der Brennstoffe über der Elektrode so gleichmäßig wie möglich wird. Insbesondere bei Brennstoffzellen ist es im Stand der Technik bekannt, über die Gestaltung des Strömungsfeldes in den Gasverteilungsplatten - bzw. bei Brennstoffzellen mit Methanol als Brennstoff in der Flüssigkeitsverteilungsplatte - und über die Zahl und Anordnung der Brennstoffzu- und -abführungspunkte eine Vergleichmäßigung zu erreichen.

Diverse Untersuchungen über Messungen der Strom- und Temperaturverteilung in situ wurden ebenfalls durchgeführt. Es wurden jedoch im Stand der Technik keine Lösungen gefunden, die das Problem der inhomogenen Stromdichte und Temperaturverteilung anders als durch die Optimierung der Strömungsfelder und der Anzahl der Brennstoffzuführungen lösen.

Die DE 10 2004 014 493 A1 offenbart ein Verfahren zur Bestimmung der Stromdichteverteilung in einer Brennstoffzelle oder einem Brennstoffzellenstapel, bei dem bei einer innerhalb der Brennstoffzelle angeordneten matrixförmig segmentierten, leitfähigen Platte jedes Segment durch jeweils zwei Kabel über Drähte elektrisch kontaktiert wird, wobei jeweils alle in einer Reihe angeordneten Segmente für einen ersten Kontakt über einen reihenweise geführten Draht kontaktiert sind und alle in einer Spalte angeordneten Segmente für einen zweiten Kontakt über einen spaltweise geführten Draht kontaktiert sind. Ferner ist wenigstens ein Segment, das als Referenz dient, zusätzlich durch zwei separate Kontaktdrähte kontaktiert. Ein durch ein Segment fließender Strom erzeugt jeweils eine Potentialdifferenz in einem Segment und die Potentialdifferenzen aller Segmente führen bei den reihen- und spaltenweise geführten Drähten jeweils zu einer Spannungsdifferenz, die an den Enden der Drähte abgegriffen wird. Zusätzlich wird die Spannungsdifferenz an den beiden separaten Kontaktdrähten des Referenzsegments abgegriffen und aus der Verteilung der Spannungsdifferenzen an den Drahtenden der reihen- und spaltenweise geführten Drähte die Stromdichteverteilung innerhalb der Segmente bestimmt, wobei die Stromdichteverteilung des Referenzsegments in die Auswertung einfließt.

Die DE 103 23 644 A1 offenbart eine Kanalstruktur für PEM-Brennstoffzellen, die zur Anpassung des Gasflusses auf der Membran-Elektroden-Struktur lokal unterschiedlich ausgebildet ist. Durch Verändern von Anzahl und/oder Querschnitt der gasführenden Kanäle pro Flächeneinheit wird der aktive Gasvolumenstrom lokal variiert und verringert sich von Kathodeneingangsport bis zum Kathodenausgangsport.

Aus der DE 103 92 974 T5 ist eine Widerstandsschaltung für die Messung der Strom- und Temperaturverteilung vor Ort für eine Brennstoffzelle bekannt. Hiernach wird eine Sensoranordnung zum Messen eines Betriebsparameters einer Brennstoffzelle vorgesehen, mit einer ersten Strömungsplatte, die in eine Vielzahl elektrisch isolierter Gebiete segmentiert ist, einer zweiten Strömungsfeldplatte und einer Leiterplatte, die zwischen der ersten und der zweiten Strömungsfeldplatte angeordnet ist und eine Widerstandsgruppierung aufweist, wobei jedem der Vielzahl elektrisch isolierter Gebiete ein Widerstand zugeordnet ist, um den durch die elektrisch isolierten Gebiete fließenden Strom zu messen.

Die DE 10 2005 002 174 A1 offenbart eine Fluidverteilungsschicht, z.B. für die Membran einer Brennstoffzelle, und ein Verfahren zu ihrer Herstellung. Hierbei ist ein dreidimensionales System umgrenzter Kanäle zum Transport eines Fluids vorgesehen, wobei in unterschiedliche Dimensionen laufende Kanäle an definierten Punkten in Fluidverbindung stehen. Das Kanalsystem weist auf einer ersten Oberfläche der Schicht Ausgänge auf, so dass auf der anderen Oberfläche der Schicht ungleichmäßig zugeführtes Fluid vom Kanalsystem aus verteilt wird. Hierdurch treten an allen Ausgängen des Kanalsystems auf der ersten Oberfläche der Schicht Fluidströme aus. Dies soll zu einem über die gesamte erste Oberfläche betrachtet im Wesentlichen homogenen Fluidsystem führen.

Aus der DE 10 2004 016 318 A1 sind eine Bipolarplatte sowie ein Verfahren zu deren Herstellung und ein die Bipolarplatte enthaltendes elektrochemisches System bekannt, wobei eine erste Platte mit einem ersten Flowfield zur Medienverteilung sowie eine zweite Platte mit einem zweiten Flowfield zur Medienverteilung vorgesehen sind. Die erste Platte weist im Bereich des ersten Flowfields einen ersten Flächenabschnitt auf, aus dem herausragend diskrete und voneinander beabstandete Erhebungen verteilt angeordnet sind.

Die DE 11 2005 001 970 T5 offenbart eine geprägte Brücke und Platte für eine Reaktandenlieferung für eine Brennstoffzelle, wobei eine Platte, die einen Rand mit einer dort hindurchtretend ausgebildeten Öffnung und ein in einer Fläche der Platte ausgebildetes Strömungsfeld aufweist, und ein Brückenelement in Dichtungskontakt mit dem Rand und die Öffnung umgebend vorgesehen sind, um eine erhöhte Fläche um die Öffnung zu schaffen. Das Brückenelement weist einen Satz von darin ausgebildeten Anschlüssen auf, um zwischen dem Rand und der erhöhten Fläche eine Fluidverbindung von der Öffnung zu dem Strömungsfeld zu schaffen.

Aus der DE 10 2004 014 114 A1 ist eine Vorrichtung zur Bestimmung der Stromdichteverteilung in Brennstoffzellen bekannt, bei der wenigstens eine Brennstoffzelle mit zwei bipolaren Platten, einer Membran-Elektroden-Einheit und einer Endplatte versehen ist. Ferner ist wenigstens eine segmentierte, leitfähige Platte vorgesehen, die zwischen der bipolaren Platte und einer Endplatte angeordnet ist, wobei jedes Segment dieser Platte über zwei Drähte über Kontaktpunkte elektrisch kontaktiert ist. Nach der Stromdichteverteilungsermittlung werden die segmentierte Platte und die weiteren Platten wieder ausgebaut.

Die DE 10 2004 026 134 B4 offenbart eine Gasverteilungsfeldplatte für eine Brennstoffzelle und eine solche enthaltende Brennstoffzelle, wobei parallel verlaufende Gasführungskanäle mit einer mäanderförmigen Struktur angeordnet sind und wobei an den an Stegen mit entgegengesetzter Strömungsrichtung vorhandenen Mäandergrenzkanälen Stege mit variierender Breite vorgesehen sind, um den Quertransport von Medien entlang der Mäandergrenzkanäle zu vermindern, wobei die Breite der Gasführungskanäle konstant ist.

Die DE 10 2006 017 064 A1 offenbart einen Brennstoffzellenstapel mit einer Vielzahl benachbart gestapelter Brennstoffzellenmodule, von denen jedes eine Vielzahl benachbart ausgerichteter Brennstoffzellen aufweist, die elektrisch in Reihe geschaltet sind. Der Stromfluss zwischen benachbarten Brennstoffzellen wird über Diffusionsmedlen der benachbarten Brennstoffzellen erreicht. Der für den Elektronenfluss vorgegebene Strompfad führt im Wesentlichen durch Diffusionsmedien, die den Brennstofftransport und den Abtransport von Reaktionsprodukten übernehmen.

Bei herkömmlichen in Reihe geschalteten Brennstoffzellen werden Elektronen ebenfalls durch die Diffusionsmedien bzw. die Gasdiffusionsschicht geleitet, allerdings senkrecht zu dem Diffusionsmedium und nur für Bruchteile eines Millimeters pro Zelle. Der elektrische Widerstand des Diffusionsmediums ist somit sehr gering. Bei der in der DE 10 2006 017 064 A1 vorgeschlagenen Lösung ist dagegen der Weg der Elektronen durch die Diffusionsschicht viel länger.

Die DE 101 51 601 A1 offenbart ein Gasverteilungselement zur Reaktionsgaszuführung zu einer oder mehreren elektrochemischen Elektroden. Das Gasverteilungselement ist mit Gasräumen versehen. Mittels des Gasverteilungselements sollen lokale Stromverteilungen gemessen werden Können. Hierzu ist in dieses eine Messplatine integriert, die eine Mehrzahl von Messsegmenten aufweist, über die eine lokale Stromverteilung gemessen werden kann. Zum elektrischen Kontaktieren einer Elektrode ist eine Mehrzahl von Stromableitungselementen vorgesehen, über die Ströme in Normalenrichtung zur Messplatine abgeleitet werden.

Bei zeitlich variablen Strömen ergibt sich insbesondere bei Brennstoffzellen für Anwendungen mit hoher Leistungsdynamik das weitere Problem, dass die Brennstoffzufuhr zwar nahezu zeitgleich mit dem Gesamtstrom verändert werden kann, die Wirkung innerhalb der Brennstoffzelle am Reaktionsort jedoch zeitverzögert auftritt. Während der Stromänderung und der damit verbundenen Änderung der Brennstoffzufuhr gibt es somit immer Bereiche, in denen die lokale Konzentration von Brennstoff entweder zu hoch oder zu niedrig ist und jedenfalls nicht dem Optimum bei stationären Bedingungen entspricht. Zur Lösung dieses Problems sind im Stand der Technik verschiedene Strategien bekannt, wie z.B. die Begrenzung des Leistungsgradienten, wie in der DE 101 09 151 A1 offenbart. Ferner sind regelungstechnische Algorithmen zur Anpassung der Brennstoffzufuhr an eine aktuelle Leistung und einen aktuellen Leistungsgradienten bekannt.

Bei sehr schnellen Stromänderungen, z.B. durch Schaltvorgänge von Halbleiterelementen, oder der Überlagerung des durch das elektrochemische Energieumwandlungssystem fließenden Gleichstroms mit Wechselstromanteilen, die durch Lasten, wie Wechselrichter, Motorsteuerungen, etc., verursacht werden können, muss außerdem mit Stromverdrängungseffekten gerechnet werden, zu denen der sog. transiente Skineffekt gehört. Über diesen wird am Beispiel eines zylindrischen Massivleiters in Hannakam: "Berechnung der transienten Stromverteilung in einem zylindrischen Massivleiter", ETZ-A 91, 1970, berichtet. Ropeter hat am Beispiel von Batterien in seiner Dissertation "Verhalten von Batterien bei impulsförmigen Strombelastungen unter Berücksichtigung des Skineffekts", Dissertation Institut für Elektrische Energietechnik, TU Clausthal, 2007, gezeigt, dass derartige Stromverdrängungseffekte, insbesondere transiente Skineffektphänomene, die bei Schaltvorgängen auftreten können, gezielt zur Erwärmung von Batterien eingesetzt werden können und die inhomogene Stromverteilung in Elektroden von Batterien, die durch überlagerte Wechselstromanteile verursacht wird, nicht vernachlässigt werden dürfen.

Der vorliegenden Erfindung liegt nun die Aufgabe zugrunde, bei einem elektrochemischen Energieumwandlungssystem Strom- und Temperaturinhomogenitäten innerhalb des elektrochemischen Energieumwandlungssystems zu vermeiden, also insbesondere den Stromfluss hierin zu homogenisieren.

Die Aufgabe wird für ein elektrochemisches Energieumwandlungssystem nach dem Oberbegriff des Anspruchs 1 dadurch gelost, dass zum Homogenisieren des Stromflusses innerhalb des elektrochemischen Energieumwandlungssystems und der Stromdichteverteilung in den elektrisch leitenden Komponenten zumindest eine der elektrisch leitenden Komponenten in zumindest zwei elektrisch gegeneinander isolierte Segmente unterteilt ist und zumindest eine Transferplatte, bestehend aus elektrisch nicht leitfähigem Material mit zumindest zwei leitenden Teilstücken und/oder Bereichen, vorgesehen ist zum Leiten eines Stroms von zumindest einem Segment zu zumindest einem anderen Segment. Die Aufgabe wird ferner für eine Transferplatte nach dem Oberbegriff des Anspruchs 14 dadurch gelöst, dass die Transferplatte aus elektrisch nicht leitfähigem Material besteht und zumindest zwei elektrisch leitende Teilstücke und/oder Bereiche aufweist. Weiterbildungen der Erfindung sind in den abhängigen Ansprüchen definiert.

Dadurch wird ein elektrochemisches Energieumwandlungssystem geschaffen, bei dem die einzelnen elektrisch leitenden Komponenten des elektrochemischen Energieumwandlungssystems oder zumindest eine der Komponenten in gegeneinander isolierte Segmente unterteilt ist. Ferner wird die Transferplatte in das elektrochemische Energieumwandlungssystem integriert. Hierdurch wird nicht nur der Stromfluss insbesondere des elektrochemischen Energieumwandlungssystems, z.B. von Elektrolyseanlagen, von Brennstoffzellenstapeln, von Redox-Flow-Batterien und anderen elektrochemischen Energieumwandlungssystemen mit einem vergleichbaren Aufbau, homogener, sondern auch verhindert, dass Strom in Elektroden und Elektrolyt entgegen einer bei einer Stromabgabe existierenden Vorzugsrichtung fließen kann, sogar dann, wenn dieser Effekt nur selten und nur für wenige Millisekunden aufträte. Hierdurch können Schädigungen des elektrochemischen Energieumwandlungssystems, die durch eine falsche Stromrichtung auftreten können, vorteilhaft vermieden werden. Eine homogenere Stromverteilung in den elektrisch leitenden Komponenten, insbesondere von Elektroden eines Brennstoffzellenstapels, führt zu einer gleichmäßigeren Temperatur der Elektroden mit geringeren Temperaturmaxima. Dadurch können temperaturabhängige Alterungsprozesse verlangsamt und die Gefahr von lokalen Überschreitungen von Temperaturgrenzwerten unterdrückt oder zumindest vermindert werden, die ansonsten zu einer Zerstörung der Elektroden oder allgemein der elektrisch leitenden Komponenten führen können. Durch die homogenere Stromdichteverteilung ist auch eine gleichmäßigere Brennstoffnutzung bei einer Brennstoffzelle möglich bzw. wird die Abscheidung bei elektrometallurgischen oder galvanischen Anlagen oder Elektrolyseanlagen gleichmäßiger. Aufgrund der gleichmäßigeren Brennstoffnutzung kann das Risiko eines lokalen Brennstoffmangels und daraus resultierenden beschleunigten Alterungsprozesses vermindert werden. Während eines stationären Betriebs oder bei Ändern der Leistungsabgabe des elektrochemischen Energieumwandlungssystems können die Temperaturgradienten innerhalb des elektrochemischen Energieumwandlungssystems vermindert werden. Temperaturgradienten haben dadurch einen geringeren Einfluss auf die Lebensdauer des elektrochemischen Energieumwandlungssystems.

Durch die homogenere Reaktionsführung kann auch der elektrische Wirkungsgrad des elektrochemischen Energieumwandlungssystems verbessert werden.

Bei dem in der DE 10 2006 017 064 A1 existierenden "hochohmigen" Kurzschluss sind erhebliche Spannungs- und Wirkungsgradeinbußen zu erwarten. Der Strompfad für die Elektronen führt ausschließlich entlang der Diffusionsschicht und beträgt pro Zelle mehrere Zentimeter, wenn übliche Dimensionen von Brennstoffzellen angenommen werden. Der elektrische Widerstand und damit der Spannungsabfall entlang der Diffusionsschicht sind somit um ein Vielfaches höher und der Zellwirkungsgrad wird dadurch merklich kleiner als dies bei dem elektrochemischen Energieumwandlungssystem gemäß der vorliegenden Erfindung der Fall ist.

Auch die Analyse von Ropeter (siehe oben) umfasst keine Brennstoffzellen oder Ausschaltvorgänge bei diesen. Durch Vorsehen der Trennung der elektrisch leitenden Komponenten in elektrisch gegeneinander isolierte Segmente und das Vorsehen der Transferplatte zum Leiten von Strom von einem Segment in ein anderes muss nicht mehr mit dem Aufbau von Ringströmen durch einen Brennstoffzellenstapel bei schnellen Ausschaltvorgängen oder ungünstiger Brennstoffzusammensetzung gerechnet werden:

Vorteilhaft ist bei dem elektrochemischen Energieumwandlungssystem zwischen jeweils zwei Segmenten zumindest ein elektrisch isolierendes Trennelement vorgesehen. Das Trennelement kann in verschiedensten Arten ausgebildet sein, z.B. in Form einer dünnen Trennschicht mit guter thermischer Leitfähigkeit. Durch die elektrische Trennung durch ein Trennelement können Spannungsunterschiede zwischen den einzelnen Segmenten der elektrisch leitenden Komponenten, wie z.B. von Bipolarplatten, gezielt herbeigeführt werden. Spannungsunterschiede zuzulassen ist vorteilhaft, damit in den einzelnen Segmenten ähnliche Ströme fließen können, obwohl durch unterschiedliche Brennstoffkonzentrationen unterschiedliche Elektrodenspannungen verursacht werden.

Es ist aber auch möglich, zum Erhalt eines Spannungsunterschieds zwischen den Segmenten den im Vergleich zum Längswiderstand sehr viel größeren Querwiderstand der Komponente zu nutzen. Der Längswiderstand der einzelnen elektrisch leitenden Komponenten wird durch deren sehr große Fläche und sehr geringe Dicke bestimmt, der Querwiderstand dagegen durch deren sehr geringe Fläche und große Länge. Komponenten von Brennstoffzellensystemen für mobile Anwendungen oder Hausenergieversorgungen haben üblicherweise eine Fläche F von ca. 10 x 10 bis 20 x 20 $cm^2$ und eine Dicke d von ca. 0,1 mm (Elektrolyt) oder max. ca. 2 mm (Bipolarplatte). Der Widerstand berechnet sich zu p x d/F. Für den Längswiderstand eines Segments ist d/F ca. $10^{-3}$ bis $10^{-5}$ $cm^{-1}$. Für eine Abschätzung des Querwiderstands müssen Annahmen über die relevanten Längen und Flächen gemacht werden. Als Länge kann z.B. der Abstand des Mittelpunkts der Segmente, z.B. 4 cm und als Fläche der Längsquerschnitt der Komponente, z.B. 0,1 cm (Dicke der Komponente) x 10 cm (Länge der Komponente) genommen werden. Das Verhältnis von d/F beträgt 4 $cm^{-1}$. Bei Verwendung üblicher Bauformen von Brennstoffzellenstapeln ergeben sich daher sehr große Unterschiede zwischen dem Längs- und dem Querwiderstand. Es können somit auch alleine unter Ausnutzen des Querwiderstands Spannungsunterschiede zwischen den Segmenten der elektrisch leitenden Komponenten, wie z.B. von Bipolarplatten, gezielt herbeigeführt werden. Es ist klar, dass der Stromfluss in Querrichtung nur bei erheblichen Spannungsunterschieden zwischen den Segmenten einen nennenswerten Betrag haben kann. Der Verzicht auf elektrisch isolierende Trennelemente in den Komponenten zugunsten der Nutzung des Querwiderstands als hochohmige Trennung kann die konstruktive Gesamtgestaltung deutlich vereinfachen. Vorteilhaft ist bei einer Bipolarplatte als Trennelement der Querwiderstand der Bipolarplatte im Verhältnis zum Längswiderstand sehr viel größer, insbesondere um einen Faktor von mehr als $10^2$, beispielsweise um einen Faktor von $10^3$ bis $10^5$.

Bei dem Anordnen von z.B. Brennstoffzellen in Reihe werden die Trennelemente vorteilhaft übereinander angeordnet, so dass der Stromfluss bis zur Transferplatte von einer Zelle zur anderen immer im gleichen Segment stattfindet.

Vorteilhaft ist zumindest eine elektrisch leitende Komponente in zwei voneinander getrennte Halbkomponenten gleicher Fläche aber halber Dicke unterteilt, damit zwischen ihnen eine Transferplatte eingebaut werden kann. Beispielhaft wird eine Bipolarplatte, die ebenso wie Elektrolyt und Gasverteilungsschicht eine geringe Querleitfähigkeit aufweist, als elektrisch leitende Komponente des elektrochemischen Energieumwandlungssystems in Halbbipolarplatten unterteilt. Die Halbbipolarplatten sind beide entweder durch Trennelemente oder die geringe Querleitfähigkeit in Segmente unterteilt.

Der Aufbau mit den Halbkomponenten bzw. Halbbipolarplatten wird zum Verbinden mit der Transferplatte verwendet, die zum Vergleichmäßigen der Stromdichteverteilung innerhalb des elektrochemischen Energieumwandlungssystems zwischen den Halbkomponenten angeordnet wird. Die Transferplatte ermöglicht den Stromfluss zwischen den einzelnen, entweder durch Trennelemente gegeneinander isolierten oder durch die geringe Querleitfähigkeit hochohmig verbundenen Segmenten der elektrisch leitenden Halbkomponenten. Da eine Bipolarplatte recht einfach konstruktiv modifiziert und bearbeitet werden kann, eignet sich diese besonders als Halbkomponente und zur Kombination mit der Transferplatte.

Als Alternative zu den Trennelementen zur Bildung von elektrisch voneinander getrennten Segmenten kann eine elektrisch leitende Komponente, insbesondere eine Bipolarplatte eines Brennstoffzellenstapels oder die Elektroden einer Galvanikanlage, einer elektrometallurgischen Anlage oder einer Elektrolyseanlage, aus einem elektrisch anisotrop leitenden Material bestehen, dessen elektrische Leitfähigkeit in Richtung senkrecht zur Fläche hoch und in den anderen Richtungen demgegenüber geringer ist. Bereits eine Verringerung der Leitfähigkeit in Querrichtung um den Faktor 2 in Relation zur Leitfähigkeit in Längsrichtung würde den Querwiderstand um den Faktor 2 erhöhen und die elektrische Verbindung zwischen den Segmenten noch hochohmiger machen und näher an die Eigenschaften durch Trennelemente elektrisch voneinander isolierter Segmente heranführen. Eine derartige Anisotropie kann z.B. in Bipolarplatten aus Graphit oder mit elektrisch leitenden Zusätzen hoch gefülltem Kunststoff durch Einbringen von dünnen, elektrisch nicht oder nur schwer leitenden Plättchen erzeugt werden, die durch den Produktionsprozess bevorzugt senkrecht zur Fläche der elektrisch leitenden Komponente orientiert werden. Außerdem kann in einem Produktionsprozess die Verteilung derartiger Plättchen in der Komponente ungleichmäßig erfolgen, so dass gewünschte Segmentgrenzen nachgebildet werden können und die Querleitfähigkeit zwischen einzelnen Segmenten gegenüber der Querleitfähigkeit bei Nutzung eines isotrop leitenden Materials weiter erhöht wird.

Die negativen Auswirkungen des Skineffekts und des transienten Skineffekts, wobei bei sehr schnellen Stromänderungen Stromverdrängungseffekte auftreten können, können durch eine optimierte Gestaltung der Segmente und der Transferplatte reduziert werden. Vorzugsweise wird die elektrisch leitende Komponente so ausgebildet, dass zur Vermeidung des transienten Skineffekts die Querleitfähigkeit der elektrisch leitenden Komponente in radialer Richtung der Segmente von deren Mitte aus abnimmt. Dies kann z.B. durch das Vorsehen von anisotrop leitenden Materialien erfolgen, deren Leitfähigkeit von der Mitte ausgehend in radialer Richtung reduziert ist, z.B. durch Einbringen entsprechender nicht oder schlecht leitender Plättchen in das Material der jeweiligen elektrisch leitenden Komponente. Ferner wird vorzugsweise zumindest ein Segment in der Mitte einer Zelle, umgeben von den anderen Segmenten angeordnet, wobei der Strompfad durch das elektrochemische Energieumwandlungssystem durch Transferplatten vorteilhaft so geleitet wird, dass jeder Strompfad sowohl durch Segmente am Außenrand als auch durch das oder die Segmente im Inneren führt. Um sicherzustellen, dass es keine Ausbildung des transienten Skineffekts in Teilbereichen des elektrochemischen Energieumwandlungssystems, insbesondere eines Brennstoffzellenstapels gibt, wird der Strompfad häufig von einem äußeren zu einem inneren Segment geführt. Bei der Wahl des Strompfads werden vorzugsweise die Materialeigenschaften des verwendeten Materials der elektrisch leitenden Komponenten, die Dicke jeder Komponente, die Anzahl von Zellen und die bei Schaltvorgängen auftretenden Stromgradienten berücksichtigt. Die Eindringtiefe von Wechselstrom mit der Frequenz w ist umgekehrt proportional zu der Wurzel des Produkts aus Frequenz, elektrischer Leitfähigkeit und Permeabilität des Materials.

Auch können die durch Trennelemente oder anisotrop leitende Materialien gebildeten Segmente unterschiedlich groß ausgebildet sein und beliebige Formen aufweisen, die jedoch die Fläche der elektrisch leitenden Komponenten vollständig und überlappungsfrei abdecken sollten. Zu Optimierungszwecken kann auch die Segmentgröße und Form zwischen unterschiedlichen Zellen verändert werden.

Vorteilhaft sind die elektrisch leitenden Teilstücke der Transferplatte elektrisch voneinander getrennt. Diese Trennung kann auch ohne eine Isolation zwischen den elektrisch leitenden Teilstücken und/oder Bereichen der Transferplatte voneinander vorgesehen sein, wobei lediglich der Querwiderstand wie ein Trennelement zwischen den elektrisch leitenden Bereichen/Teilstücken wirkt. Ob eine elektrische Trennung durch Isolation oder eine Trennung unter Ausnutzen des Querwiderstandes vorgesehen wird, kann anwendungsspezifisch gewählt werden, wobei die Qualität der Trennung von der Höhe des Querwiderstands abhängt. Bei einem sehr geringen Querwiderstand bei Nutzung dicker gut leitender Materialien ist eine Trennung durch Isolation günstiger.

Zwischen den elektrisch leitenden Teilstücken und/oder Bereichen der Transferplatte sind vorteilhaft Verbindungselemente vorgesehen und gegeneinander isoliert. Durch Vorsehen solcher Verbindungselemente ist das gezielte Verbinden der elektrisch leitenden Teilstücke und/oder Bereiche auf unterschiedlichen Seiten der Transferplatte möglich. In einer Variante können die Verbindungselemente Kabel sein, wobei insbesondere bei Vorsehen mehrerer Kabel deren Widerstand einander entspricht oder ähnlich ist. Ferner können die Verbindungselemente im Wesentlichen flache mit den leitenden Bereichen der Transferplatte verbundene Elemente mit ähnlichem Widerstand sein. Durch das Vorsehen von Verbindungselementen, die im Wesentlichen den gleichen Widerstand aufweisen, kann Strom von den einen elektrisch leitenden Bereichen in die anderen mit etwa dem gleichen Spannungsabfall für jedes Teilstück/Bereich geleitet werden.

Die Verbindungselemente können außerhalb der Transferplatte angeordnet sein, um Strom von einem Segment zu einem anderen zu leiten. Alternativ können die Verbindungselemente auch innerhalb der Transferplatte angeordnet sein. Ferner ist es möglich, einen Teil der Verbindungselemente innerhalb und einen Teil außerhalb der Transferplatte anzuordnen. Die Verbindungselemente können vorteilhaft an der Stelle der Teilstücke befestigt sein, an der der geringste Gesamtwiderstand für den Strom, der in das Teilstück fließt und vom Verbindungselement weitergeleitet wird, vorhanden ist. In vielen Fällen wird das der elektrische Schwerpunkt des jeweiligen Teilstücks/Bereichs sein, wobei als elektrischer Schwerpunkt der Punkt zu verstehen ist, der bzgl. des Gesamtwiderstands eines punktförmigen Leiteranschlusses an eine leitende Fläche den geringsten Widerstandswert hat. Die Stellen, an denen die Verbindungselemente auf den elektrisch leitenden Bereichen befestigt werden können oder befestigt sind, können auch anwendungsspezifisch vorgegeben werden.

Der Grundkörper der Transferplatte besteht vorteilhaft aus einem nicht elektrisch leitenden Material, insbesondere zum Teil aus Luft, was bedeutet, dass sie zum Teil als luft- oder brenngasgefüllter Hohlkörper ausgebildet ist. Hierdurch sind eine besonders gute Isolierung, eine kostengünstige Lösung und zugleich ein geringes Gewicht der Transferplatte möglich.

Als besonders vorteilhaft erweist es sich, wenn die Transferplatte mit zumindest einer Bipolarplatte zusammen eine konstruktive Einheit bildet. Hierdurch wird eine kompakte und einfach in das elektrochemische Energieumwandlungssystem integrierbare Einheit geschaffen. Grundsätzlich kann die Einheit dadurch geschaffen werden, dass eine Bipolarplatte bereits mit der Funktion der Transferplatte versehen wird. Beispielsweise können die elektrisch leitenden Teilstücke und/oder Bereiche der Transferplatte dadurch gebildet sein, dass die gleiche Oberflächenstruktur und Oberflächenbehandlung wie bei der Bipolarplate verwendet wird.

In einer alternativen, oder zusätzlich zur Nutzung von Transferplatten vorgeschlagenen Lösung ist zum Homogenisieren des Stroms innerhalb des elektrochemischen Energieumwandlungssystems zumindest eine leistungselektronische Komponente vorgesehen, so dass die Stromdichteverteilung durch Vorsehen der leistungselektronischen Komponente beeinflusst werden kann. Hierbei wird die Stromdichte in den Segmenten der elektrisch leitenden Komponenten bzw. das Potential der Segmente gegen eine Referenzelektrode oder den Strom in einem Referenzsegment gemessen und je nach Optimierungsziel die Stromdichte oder das Potential des jeweiligen Segments mittels zumindest einer leistungselektronischen Komponente auf- oder abwärts gewandelt. Die leistungselektronischen Komponenten können dabei entweder zwischen zwei Zellen und/oder am Anfang und/oder Ende eines (Brennstoffzellen)Stapels oder allgemein des elektrochemischen Energieumwandlungssystems angeordnet werden. Vorteilhaft ist eine in elektrisch voneinander getrennte Segmente aufgeteilte Endplatte des elektrochemischen Energieumwandlungssystems vorgesehen, an die die leistungselektronische Komponente angeschlossen wird. Weiter vorteilhaft ist die Transferplatte zwischen zwei Teilen eines elektrochemischen Energieumwandlungssystems, insbesondere Stapeln einer Brennstoffzelle, angeordnet und sind statt einer Halbbipolarplatte mit Trennelementen Endplatten mit Trennelementen oder Polbrücken mit Trennelementen vorgesehen, insbesondere elektrisch isolierende oder durch Querwiderstand gebildete Trennelemente. Bei einem Brennstoffzellenstapel ist die leistungselektronische Komponente vorzugsweise auf der dem Brennstoffzellenstapel abgewandten Seite der Endplatte angeordnet, weil dann die konstruktiven Eingriffe in den Brennstoffzellenstapel minimiert werden können und sogar die leistungselektronischen Komponenten außerhalb des Brennstoffzellenstapels an einer günstigen anderen Stelle platziert werden können.

Vorteilhaft ist die leistungselektronische Komponente in zumindest einen Strompfad zwischen den Segmenten der zumindest einen elektrisch leitenden Komponente integrierbar oder integriert zum im Wesentlichen verlustarmen Ändern der Spannung. Die leistungselektronische Komponente kann die aufgenommene Leistung an zumindest eine andere elektronische Komponente zwischen anderen Segmenten weiterleiten und/oder für den Betrieb von Hilfsaggregaten bereitstellen.

In einer weiteren, alternativ oder zusätzlich zur Nutzung von Transferplatten und/oder leistungselektronischen Komponenten vorgeschlagenen Lösung ist zum Homogenisieren des Stroms innerhalb des elektrochemischen Energieumwandlungssystems vorgesehen, die Brennstoff- oder Reaktandenzufuhr so zu gestalten, dass der Brennstoff in unterschiedlicher Reihenfolge durch die verschiedenen Segmente strömt.

Zur näheren Erläuterung der Erfindung werden im Folgenden Ausführungsbeispiele von dieser näher anhand der Zeichnungen beschrieben. Diese zeigen in:

Figur 1    eine Prinzipskizze eines elektrochemischen Energieumwandlungssystems in Form eines Brennstoffzellenstapels,

Figur 2    eine Skizze eines Ersatzschaltbildes des Brennstoffzellenstapels gemäß Figur 1,

Figur 3    eine Prinzipskizze eines Brennstoffzellenstapels mit erfindungsgemäßer Unterteilung der elektrisch leitenden Komponenten in drei Segmente,

Figur 4    eine Skizze eines elektrischen Ersatzschaltbildes des Brennstoffzellenstapels gemäß Figur 3,

Figur 5    eine perspektivische Ansicht einer Bipolarplatte mit drei leitenden Segmenten und zwei Trennelementen,

Figur 6    eine perspektivische Ansicht der Bipolarplatte gemäß Figur 5 mit einer Trennung in zwei Halbbipolarplatten,

Figur 7    eine perspektivische Ansicht einer erfindungsgemäßen Transferplatte mit drei Segmenten und mit innen vorgesehenen Verbindungskabeln,

Figur 8    eine perspektivische Ansicht einer Variante der Transferplatte gemäß Figur 7, mit außen angebrachten Verbindungskabeln,

Figur 9    eine perspektivische Explosionsansicht der Teile einer erfindungsgemäßen Transferplatte mit flachen Verbindungselementen zwischen den Teilstücken der Transferplatte,

Figur 10   eine Skizze eines Brennstoffzellenstapels mit einer erfindungsgemäßen Transferplatte,

Figur 11   eine Skizze des elektrischen Ersatzschaltbildes einer modifizierten Bipolarplatte mit Transferplatte des Brennstoffzellenstapels gemäß Figur 10,

Figur 12   eine Prinzipskizze einer zweiten Ausführungsform eines erfindungsgemäßen Brennstoffzellenstapels mit zwei Transferplatten,

Figur 13   eine perspektivische Ansicht eines Brennstoffzellenstapels mit alternativer Verbindungskabelführung zur Vermeidung eines transienten Skineffekts,

Figur 14   eine Prinzipskizze eines Brennstoffzellenstapels mit leistungselektronischem Auf- und Abwärtswandler, und

Figur 15   eine Prinzipskizze eines Brennstoffzellenstapels mit erfindungsgemäßer Unterteilung der elektrisch leitenden Komponenten in drei Segmente und Darstellung der Brennstoffzufuhr in unterschiedliche Segmente.

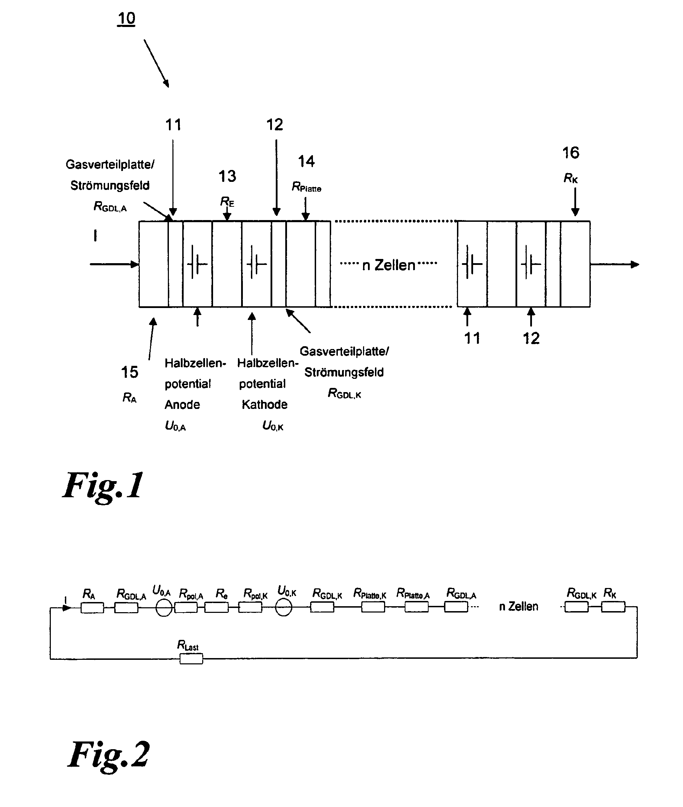

Figur 1 zeigt einen bekannten Aufbau eines Brennstoffzellenstapels 10 mit Bipolarplatten, Figur 2 das daraus abgeleitete elektrische Ersatzschaltbild. Der Brennstoffzellenstapel 10 wird durch n Zellen gebildet, die jeweils eine Brennstoffanode 11, eine Brennstoffkathode 12, einen dazwischen angeordneten Elektrolyt 13, eine Bipolarplatte 14 und Gasdiffusionsschichten gebildet werden. Alle diese Elemente sind im Ersatzschaltbild als Widerstandselemente dargestellt, ebenso wie der Durchtrittswiderstand der elektrochemischen Reaktion und die elektrochemische Spannungsquelle, die als anodenseitige und kathodenseitige Spannungsquelle gezeigt ist, wobei in Figur 1 das Halbzellenpotential der Anode und das der Kathode angedeutet ist. Der Brennstoffzellenstapel weist ferner eine Anodenendplatte 15 und eine Kathodenendplatte 16 auf. Die in dem Ersatzschaltbild gewählten Indizes K und A geben jeweils die Kathodenseite und die Anodenseite an. Der in dem Ersatzschaltbild ebenfalls gezeigte Polarisationswiderstand $R_{pol}$ ist ebenfalls für die Anoden- und die Kathodenseite gezeigt.

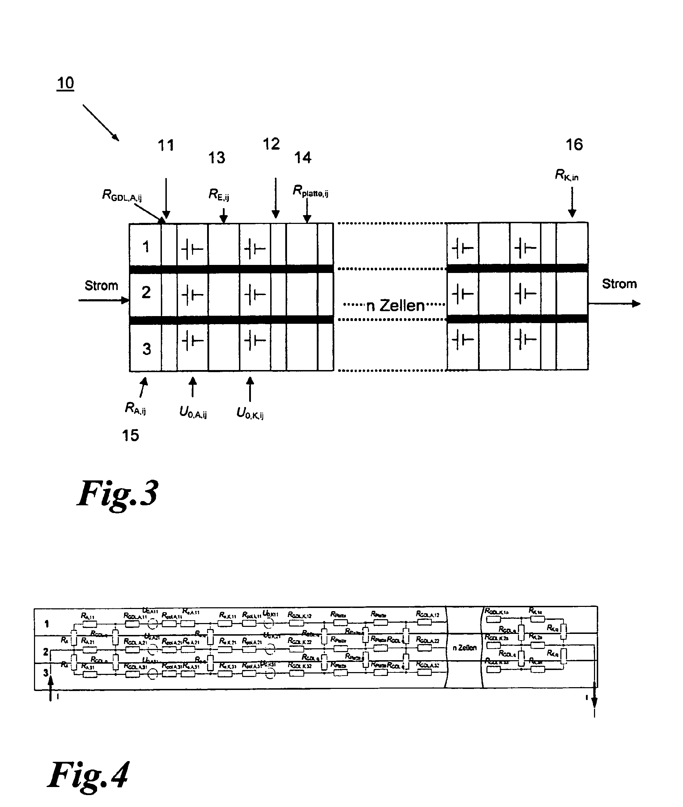

Figur 3 zeigt den Brennstoffzellenstapel 10, bei dem die einzelnen elektrisch leitenden Komponenten der Anoden, Kathoden, Elektrolyte, Bipolarplatte und Endplatten in drei Segmente 1, 2, 3 unterteilt sind. Der Gesamtwiderstand des Elektrolyten und der Bipolarplatte ist in deren Längsrichtung in zwei Teile aufgeteilt, die in der Mitte durch Querwiderstände miteinander verbunden sind, wie dem elektrischen Ersatzschaltbild in Figur 4 entnommen werden kann. Eine entsprechende Darstellung wurde für die anderen elektrisch leitenden Komponenten aus Übersichtlichkeitsgründen weggelassen. Die Querwiderstände sind im Index jeweils durch "q" gekennzeichnet. Sie zeigen an, dass Strom zwischen den Segmenten 1, 2, und 3 in Abhängigkeit von der Größe des Querwiderstands fließen kann. Die Indizes A und K zeigen wiederum die Anoden- und die Kathodenseite an. Die erste Ziffer im Index steht für die Segmente i = 1, 2 und 3, die zweite Ziffer für die Zellennummer, also j = 1 bis n.

Der einströmende Brennstoff weist im Segment 1 die höchste Konzentration auf und führt dazu, dass die Gleichgewichtsspannungen der elektrochemischen Spannungsquellen $U_{0,A,1j}$ und $U_{0,K,1j}$ im Segment 1 am höchsten sind.

Da auf allen Strompfaden der Spannungsunterschied zwischen den Polen bzw. Endplatten gleich groß sein sollte, ist die Stromdichte im Segment 1 am größten und zwar so groß, dass der durch die höhere Stromdichte verursachte höhere Spannungsabfall in den Widerständen der einzelnen Brennstoffzellenkomponenten die höhere Gleichgewichtsspannung kompensiert. Die im Bereich der Brennstoffzufuhr höhere Stromdichte bei Brennstoffzellen ist ein bekanntes Phänomen. Die jeweilige Stromdichte in den Segmenten 2 und 3 ist entsprechend niedriger. Sie führt dazu, dass die Konzentrationsabnahme an Brennstoff entlang des Weges durch die Brennstoffzelle von Segment 1 zu Segment 2 und zu Segment 3 nicht linear ist.

Die Wärmeentwicklung in einer Brennstoffzelle beruht nicht nur auf den ohmschen Verlusten entlang dem Strompfad und der Übertrittsspannung, sondern auch auf der reversiblen Wärme der Reaktion. Alle drei Effekte führen dazu, dass die Wärmeentwicklung in Segment 1 deutlich größer ist als in den Segmenten 2 und 3. Als Konsequenz ergibt sich ein deutlicher Temperaturgradient innerhalb der Elektroden, der auch bei sehr guter äußerer Kühlung nicht viel verringert werden kann.

Die Tabellen 1 und 2 zeigen das Ergebnis einer Simulation der Stromdichte- und Temperaturverteilung an einem beispielhaften Brennstoffzellenstapel mit sechs in Reihe geschalteten Zellen, wobei der Gesamtstrom 90A beträgt, die Umgebungstemperatur 303K, ein stationärer Zustand herrscht und alle Segmente aller Komponenten die gleiche Fläche aufweisen. Für die Simulation wird die Annahme gemacht, dass die Ruhespannungen $U_0$ von der lokalen Konzentration abhängig sind, die Brennstoffkonzentration im Segment 2 der Eingangskonzentration abzüglich der Brennstoffmenge, die für den in Segment 1 fließenden Strom verbraucht wird, entspricht, und die Brennstoffkonzentration in Segment 3 gegenüber der Konzentration in Segment 2 entsprechend verringert ist. Ferner wird angenommen, dass der Durchtrittswiderstand stromabhängig gemäß der Butler-Volmer-Gleichung berechnet und mit üblichen Werten parametrisiert wird, die Wärmeerzeugung auch die reversible Reaktionswärme berücksichtigt und die Wärmeabfuhr nur an der Außenfläche der Elektrode auftritt. Entsprechend Figur 3 ist die Wärmeabfuhr im Segment 2 am geringsten, da das Segment 2 nur einen geringen Außenwandanteil aufweist, wenn Figur 3 als Schnitt durch einen rechteckigen Brennstoffzellenstapel verstanden wird. Darüber hinaus wird angenommen, dass die Verhältnisse von Längs- zu Querwiderstand den jeweiligen Verhältnissen der Dimensionen von Länge und Fläche bei üblichen Brennstoffzellenstapeln entsprechen. Materialinhomogenitäten oder sonstige Unterschiede in den Strompfaden werden bei dieser Simulation nicht berücksichtigt.

Die in Tabelle 1 und 2 gezeigten Temperatur- und Strominhomogenitäten zeigen quantitativ die im Stand der Technik bereits erklärten Probleme, wobei in den Segmenten 1, 2 und 3 eine maximale Differenz von 14 A herrscht und die maximale Temperaturdifferenz 20 bzw. 28 K beträgt. Die Temperatur in dem Segment 1 in der ersten Zelle und der sechsten Zelle ist identisch und liegt in demselben Bereich wie die Temperatur in Segment 3 in der zweiten, dritten, vierten und fünften Zelle. Ferner herrscht in dem Segment 2 in der ersten und sechsten Zelle dieselbe Temperatur und liegt in demselben Bereich wie die Temperatur in dem Segment 1 in den Zellen 2 bis 5. Die Temperatur in Segment 3 ist in den Zellen 1 und 6 identisch. Die höchste Temperatur herrscht in Segment 2 in den Zellen 2 bis 5.

Tabelle 1

| Ströme [A] | Zelle 1 | Zelle 2 | Zelle 3 | Zelle 4 | Zelle 5 | Zelle 6 |
|---|---|---|---|---|---|---|
| Segment 1 | 38 | 38 | 38 | 38 | 38 | 38 |
| Segment 2 | 27 | 27 | 27 | 27 | 27 | 27 |
| Segment 3 | 24 | 24 | 24 | 24 | 24 | 24 |
| maximale Differenz [A] | 14 | 14 | 14 | 14 | 14 | 14 |

Tabelle 2

| Temperatur [K] | Zelle 1 | Zelle 2 | Zelle 3 | Zelle 4 | Zelle 5 | Zelle 6 |
|---|---|---|---|---|---|---|
| Segment 1 | 352 | 365 | 365 | 365 | 365 | 352 |
| Segment 2 | 356 | 375 | 375 | 375 | 375 | 356 |
| Segment 3 | 336 | 347 | 347 | 347 | 347 | 336 |
| maximale Differenz [K] | 20 | 28 | 28 | 28 | 28 | 20 |

Der Spannungsabfall über die einzelnen Widerstandskomponenten hinweg entlang einem jeden Segment hängt vom Strom und der Größe des Widerstands ab. Der größte Spannungsabfall tritt über den Durchtrittswiderstand der elektrochemischen Spannungsquelle und dem Elektrolyten und der geringste über den Widerstand der Bipolarplatte auf. Die Simulation zeigt, dass unabhängig vom Querwiderstand der Bipolarplatte der Spannungsunterschied zwischen den Segmenten 1 und 3 der Bipolarplatte vernachlässigbar klein ist, was sich bereits aus Symmetriegründen erklärt. Zwischen unterschiedlichen Bereichen der Endplatten gibt es keine Spannungsunterschiede, weil diese über das Strom ableitende Kabel niederohmig miteinander verbunden sind. Die Simulation zeigt, dass die Strominhomogenität nur geringfügig von den Querwiderständen der Bipolarplatte bzw. der anderen Komponenten abhängt. Die Querleitfähigkeit spielt lediglich bei Fehlern bzw. Ungleichmäßigkeiten eine Rolle. Insgesamt soll die isotrope Leitfähigkeit aller Komponenten bei einem Brennstoffzellenstapel gemäß Figur 1 so hoch wie möglich sein.

Konzeptionell handelt es sich bei dem in Figur 1 gezeichneten Brennstoffzellenstapel um ein elektrochemisches Energieumwandlungssystem, bei dem in jeder elektrisch gut leitenden Komponente ein Spannungsausgleich zwischen unterschiedlichen Segmenten der Zellen auftritt. Insbesondere in der elektrisch besonders gut leitenden Bipolarplatte gibt es keine Spannungsunterschiede, dafür variiert der Strom jedoch entsprechend stark in den Segmenten.

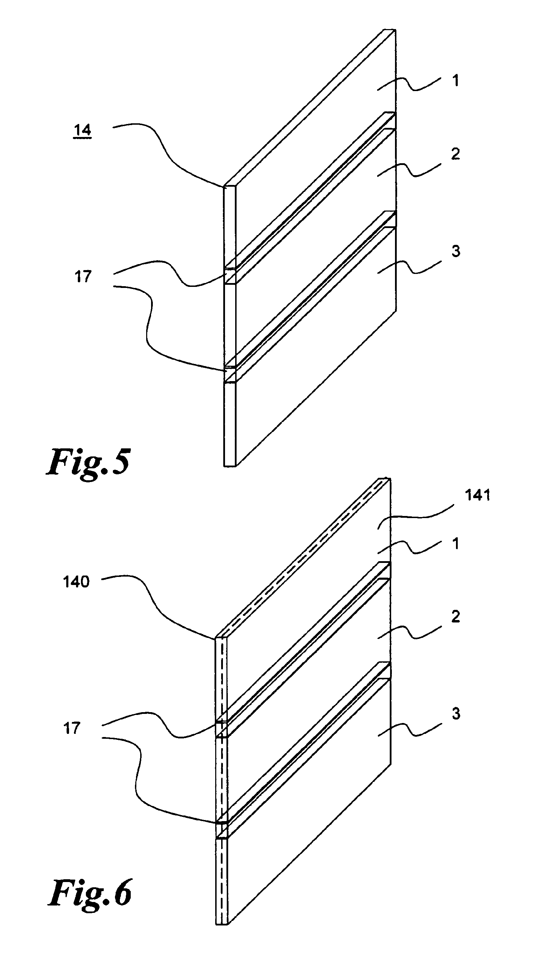

Erfindungsgemäß sollen Spannungsunterschiede zwischen den Segmenten der Bipolarplatten und den Segmenten der anderen elektrisch leitenden Komponenten gezielt herbeigeführt werden, dadurch der Strom durch die einzelnen Segmente beeinflusst und vergleichmäßigt werden, was durch die bereits in Figur 3 gezeigte Trennung aller Komponenten wie Elektrolyt, Gasverteilungsschicht, Bipolarplatte, etc., in elektrisch voneinander getrennte Segmente geschieht. In Figur 5 ist eine Bipolarplatte mit einer Trennung in drei, elektrisch voneinander getrennte Segmente gezeigt. Die elektrisch isolierenden und vorteilhafter thermisch gut leitenden Trennelemente 17 sind möglichst dünn ausgebildet, um die Segmente 1, 2 und 3 bei Beibehalten der Gesamtgröße der Bipolarplatte möglichst nicht zu verkleinern. Die Trennelemente 17 sind bei einer üblichen Montage von Zellen in Reihe übereinander angeordnet.

In Figur 6 ist eine gegenüber der Ausbildung in Figur 5 modifizierte Bipolarplatte 14 gezeigt, bei der zwei Halbbipolarplatten 140, 141 mit gleicher Fläche und gleicher Dicke, die z.B. der halben Dicke der Bipolarplatte entspricht, vorgesehen sind.

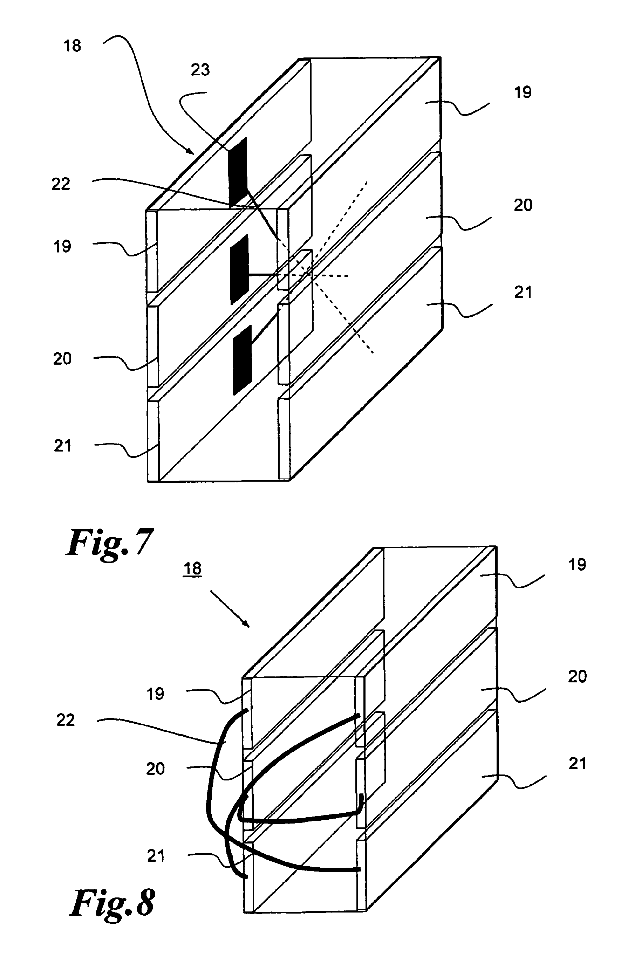

Zur Vergleichmäßigung der Stromdichteverteilung wird erfindungsgemäß zwischen den beiden Halbbipolarplatten 140, 141 eine Transferplatte angeordnet, die Figur 7 entnommen werden kann, die den Stromfluss zwischen unterschiedlichen Segmenten ermöglicht. Da die Bipolarplatte konstruktiv am einfachsten verändert und bearbeitet werden kann, erweist es sich als sinnvoll, die Transferplatte räumlich und funktionell mit einer Bipolarplatte zu kombinieren.

Die Transferplatte 18 besteht aus elektrisch nicht leitendem Material. Einander gegenüberliegende Oberflächen der Transferplatte enthalten sich nicht berührende metallisch leitende Teilstücke 19, 20, 21. Die jeweilige Fläche der Teilstücke 19, 20, 21 der einzelnen Segmente 1, 2 und 3 weisen etwa die gleiche Form und Größe wie die Segmente der benachbarten Halbbipolarplatten auf. Sie stehen bei entsprechender Orientierung stets nur mit einem Segment der Halbbipolarplatte in Berührung. Es können sich entsprechend nicht zwei benachbarte Segmente der Halbbipolarplatte über eines der Teilstücke der Transferplatte berühren. Die elektrisch isolierenden Segmentgrenzen aller Komponenten des Brennstoffzellenstapels sind somit räumlich immer an der gleichen Stelle angeordnet.

Auf der der jeweiligen Halbbipolarplatte 140, 141 abgewandten Seite der elektrisch leitenden Teilstücke 19, 20, 21, insbesondere metallischen Teilstücke, wird durch ein Verbindungselement 22, z.B. ein Kabel, das mittig auf einen leitenden Anschlussbereich 23 aufgelötet ist, der von dem leitenden Teilstück 19, 20, 21 aufgenommene Strom an ein beliebiges anderes Teilstück 19, 20, 21 auf der anderen Seite der Transferplatte 18 weitergeleitet. In Figur 7 sind drei Verbindungskabel 22 dargestellt, die den Strom von dem Teilstück 19 auf der einen Seite der Transferplatte 18 zum Teilstück 21 auf der anderen Seite der Transferplatte 18 leiten, sowie Verbindungskabel 22, die von dem Teilstück 20 auf der einen Seite der Transferplatte 18 zu dem Teilstück 20 auf der anderen Seite der Transferplatte leiten und von dem Teilstück 21 auf der einen Seite der Transferplatte 18 zu dem Teilstück 19 auf der anderen Seite der Transferplatte 18 leiten.

Eine andere Ausführungsform der Anordnung der Verbindungselemente 22 zeigt Figur 8. Bei dieser Ausführungsform sind die Verbindungskabel 22 seitlich an den elektrisch leitenden Teilstücken 19, 20, 21 der Transferplatte 18 angebracht. Der Strom wird somit auf der Außenseite der Transferplatte von einem Teilstück zu einem anderen geleitet.

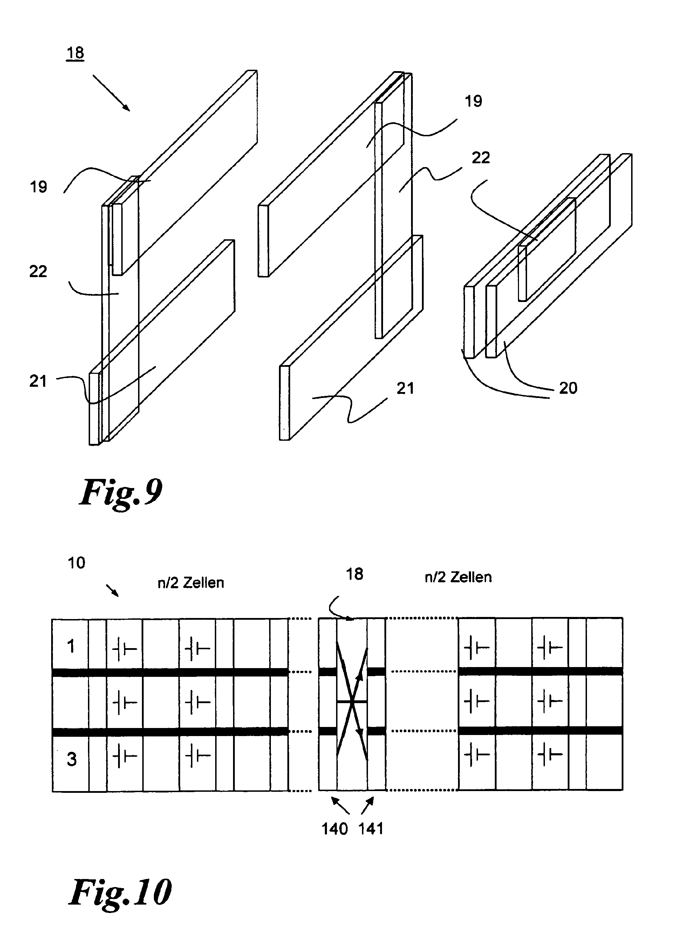

Figur 9 zeigt eine Explosionsansicht der Transferplatte 18 ohne das isolierende Grundmaterial, in dem die einzelnen Teilstücke eingebettet sind. Es ist ersichtlich, dass die einzelnen Teilstücke 19, 20, 21 der Transferplatte und die Verbindungselemente 22 auch aus einem Stück gefertigt werden können, z.B. als Pressteil. Die Verbindungselemente zwischen den elektrisch leitenden Teilstücken 19, 20, 21 und die Teilstücke selber weisen geringe und sehr ähnliche Widerstandswerte auf.

Die Transferplatte wird zwischen die beiden Halbbipolarplatten eingebracht. Die Oberflächen der Transferplatte 18, insbesondere deren Teilstücke werden so gestaltet, dass sie vorteilhaft bereits alleine durch Anpressdruck einen sehr guten elektrischen Kontakt mit der, der Membran-Elektrolyt-Assembly (MEA) abgewandten Seite der Halbbipolarplatten aufweisen. Eine glatte oberflächenbehandelte Oberfläche sowohl auf der entsprechenden Seite der Halbbipolarplatte als auch der Transferplatte sind dazu besonders geeignet. Ferner ist es auch möglich, die Transferplatte mit der Halbbipolarplatte zu verlöten oder in sonstiger Weise elektrisch oder mechanisch zu verbinden.

Alternativ ist es möglich, eine Bipolarplatte herzustellen, in der die Funktion einer derartigen Transferplatte bereits enthalten ist. Eine konstruktive Verschmelzung von Transferplatte und Bipolarplatte kann z.B. so erfolgen, dass die elektrisch leitenden Teilstücke der Transferplatte die gleiche Oberflächenstruktur und Oberflächenbehandlung wie die Bipolarplatte aufweisen, nämlich im Bereich des Flowfield, der Aufnahme der Gasdiffusionsschicht, etc., und somit die Funktion der Bipolarplatte mit übernehmen.

Figur 10 zeigt beispielhaft die Funktion der Transferplatte 18, die in der Mitte des Brennstoffzellenstapels 10 angeordnet ist. Bei einer geraden Anzahl n von Zellen, befindet sich auf beiden Seiten der Transferplatte die gleiche Anzahl m = n/2 von Zellen, bei einer ungeraden Anzahl von Zellen befindet sich auf einer Seite der Transferplatte 18 eine Zelle weniger. In der Transferplatte wird der Strom aus den Segmenten 1 der Zellen 1 bis m in das Segment 3 der Zellen m+1 bis n geleitet und der Strom aus dem Segment 3 der Zellen 1 bis m in das Segment 1 der Zellen m+1 bis n. Wenn n eine gerade Zahl ist und m =n/2, dann ist der Spannungsabfall über den neuen Strompfad 1-3 und 3-1 in der Summe gleich groß und damit auch der Strom.

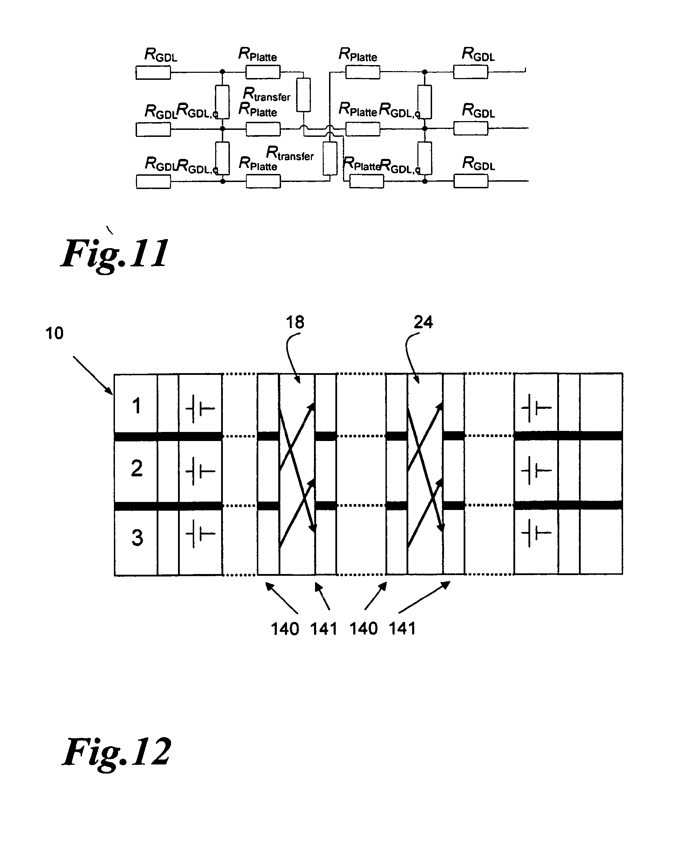

Figur 11 zeigt das elektrische Ersatzschaltbild der Transferplatte 18 aus Figur 10. Der Widerstand $R_{transfer}$ der Transferplatte ist in der Mitte des Ersatzschaltbilds zu sehen.

Die sich bei sonst gleichen Bedingungen wie oben zu Tabelle 1 und 2 ergebende Simulation des Betriebs eines Brennstoffzellensystems mit einer solchen Bipolarplatte mit Transferplatte ist in den Tabellen 3 und 4 dargestellt. Es zeigt sich unmittelbar, dass eine erhebliche Strom- und Temperaturvergleichmäßigung gegenüber der Situation ohne Transferplatte (Tabelle 1 und 2) stattgefunden hat. Die maximale Stromdifferenz beträgt lediglich noch 3 A. Die maximale Temperaturdifferenz liegt zwischen 13 und 19 K.

Durch Flächenvariation des Segments 2 auf Kosten der Flächen der Segmente 1 und 3 kann die Wärmeentwicklung so verändert werden, dass sich die Temperaturunterschiede noch verringern lassen, allerdings auf Kosten der Stromhomogenität. Die Flächen der Segmente müssen somit nicht identisch sein, sondern können durchaus in Abhängigkeit von unterschiedlichen Optimierungszielen variiert werden. Dies betrifft auch die Flächen der Segmente 1 und 3, die unterschiedlich groß sein können, z.B. um die Stromdichte in dem Segment mit geringerer Brennstoffkonzentration im Verhältnis zur Stromdichte im Segment mit der höheren Brennstoffkonzentration zu verringern oder zu vergrößern. Auch eine unterschiedliche Segmentgröße der Komponenten in den einzelnen Zellen, z.B. um die unterschiedlich gute Wärmeabfuhr in der Mitte des Brennstoffzellenstapels und an den beiden Enden zu kompensieren, bietet weitere Optimierungspotentiale.

Tabelle 3

| Ströme [A] | Zelle 1 | Zelle 2 | Zelle 3 | Zelle 4 | Zelle 5 | Zelle 6 |
|---|---|---|---|---|---|---|
| Segment 1 | 31 | 31 | 31 | 31 | 31 | 31 |
| Segment 2 | 28 | 28 | 28 | 28 | 28 | 28 |
| Segment 3 | 31 | 31 | 31 | 31 | 31 | 31 |
| maximale Differenz [A] | 3 | 3 | 3 | 3 | 3 | 3 |

Tabelle 4

| Temperatur [K] | Zelle 1 | Zelle 2 | Zelle 3 | Zelle 4 | Zelle 5 | Zelle 6 |
|---|---|---|---|---|---|---|
| Segment 1 | 344 | 356 | 356 | 356 | 356 | 344 |
| Segment 2 | 356 | 374 | 374 | 374 | 374 | 356 |
| Segment 3 | 343 | 355 | 355 | 355 | 355 | 343 |
| maximale Differenz [K] | 13 | 19 | 19 | 19 | 19 | 13 |

Figur 12 zeigt eine alternative Ausführungsform eines Brennstoffzellenstapels 10 mit zwei Transferplatten 18, 24. Hierbei können bei einem sechs Zellen aufweisenden Brennstoffzellenstapel mit einer Unterteilung in drei Segmente 1, 2, 3 zwei konstruktiv identische Transferplatten 18, 24 nach jeweils zwei Brennstoffzellen verwendet werden. Die Transferplatten 18, 24 leiten gemäß Figur 12 den Strom aus dem Segment 1 in das Segment 3 weiter, den Strom aus dem Segment 2 in das Segment 1 und den Strom aus dem Segment 3 in das Segment 2. Es ergeben sich somit drei verschiedene Strompfade, wobei jeder Strompfad die Segmente 1, 2 und 3 jeweils zweimal in je zwei Zellen durchläuft. Aufgrund der vom elektrischen Aufbau her identischen Zellen ist auch der durch alle Zellen fließende Strom gleich groß, abgesehen vom vorhandenen Temperatureinfluss. Eine Simulation mit den gleichen Voraussetzungen wie bereits oben beschrieben, veranschaulicht dies, wobei die Ergebnisse den Tabellen 5 und 6 entnommen werden können. Im Gegensatz zum weiter oben zunächst beschriebenen Beispiel ergibt sich eine sehr viel bessere Stromhomogenität, jedoch eine schlechtere Temperaturhomogenität. Die maximale Abweichung bei den durch die Zellen fließenden Strömen liegt bei 0,4 bis 0,8 Ampere, während die maximale Temperaturdifferenz zwischen 15 und 22 K beträgt. Der Grund dafür liegt in der höheren Stromdichte im Segment 2 in der Mitte des Brennstoffzellenstapels, die dadurch höhere Wärmeerzeugung und aufgrund der gleichen Kühlbedingungen höhere Temperatur.

Tabelle 5

| Ströme [A] | Zelle 1 | Zelle 2 | Zelle 3 | Zelle 4 | Zelle 5 | Zelle 6 |
|---|---|---|---|---|---|---|
| Segment 1 | 30,5 | 30,4 | 30 | 30,2 | 30,2 | 30,3 |
| Segment 2 | 29,7 | 29,7 | 30,2 | 29,8 | 30,1 | 30 |
| Segment 3 | 29,8 | 29,8 | 29, 8 | 30,1 | 29,6 | 29,6 |
| maximale Differenz [A] | 0,8 | 0,7 | 0,4 | 0,4 | 0,6 | 0,7 |

Tabelle 6

| Temperatur [K] | Zelle 1 | Zelle 2 | Zelle 3 | Zelle 4 | Zelle 5 | Zelle 6 |
|---|---|---|---|---|---|---|
| Segment 1 | 342 | 352 | 352 | 352 | 352 | 342 |
| Segment 2 | 356 | 373 | 373 | 374 | 373 | 356 |
| Segment 3 | 341 | 352 | 352 | 353 | 353 | 341 |
| maximale Differenz [K] | 15 | 21 | 21 | 22 | 21 | 15 |

Es ist klar die Wirkung der Transferplatten erkennbar, nämlich, dass durch diese erreicht werden kann, dass entlang eines jeden Strompfades die gleichen elektrischen Bedingungen herrschen und der Strom in jedem Strompfad gleich groß ist. Die Konzentration des Brennstoffs nimmt bei seinem Weg durch die Brennstoffzelle nicht proportional zur jeweiligen Konzentration ab, sondern immer um den der Stromdichte entsprechenden Betrag. Die Wärmeentwicklung entlang jedes Strompfades ist gleich bleibend, wobei die Wärmeentwicklung nicht mit der Temperaturentwicklung gleichzusetzen ist, da die Wärmeabfuhr über die Außenflächen der einzelnen Segmente unterschiedlich hoch ist. Bei direkt gekühlten Bipolarplatten beispielsweise ist die Kühlung in der Mitte des Brennstoffzellenstapels zwar recht gut, jedoch sind auch dort Temperaturinhomogenitäten zu erwarten. Dies bedeutet, dass bei gleicher Stromdichte und gleicher Wärmeentwicklung die Temperatur jeweils dort am größten ist, wo die Wärmeübertragungsfläche am kleinsten ist. Bei einer Segmentierung einer Brennstoffzelle in drei parallele Teilstücke führt dies dazu, dass die Temperaturentwicklung in dem mittleren Segment am größten ist.

Insbesondere bei Hochtemperaturbrennstoffzellen (SOFC und MCFC) spielen Temperaturhomogenitäten eine wichtige Rolle, da diese sich dort besonders negativ auswirken können. Die Flächengröße und -form der Segmente der Komponenten der einzelnen Zellen stellt in Abhängigkeit vom Einbauort der Zelle ein Optimierungsziel dar. Wird eine Temperaturhomogenität erreicht, kann auch der Temperaturgradient innerhalb des Brennstoffzellenstapels verringert werden, was zu einer erheblichen Verringerung der thermischen Belastung führt.

Anwendungsspezifisch können ferner die Anzahl der Transferplatten, die Anzahl der Segmente und deren Flächengröße sowie die Details der Verschaltung der Strompfade durch die Transferplatten hindurch zur Vergleichmäßigung der Stromdichte und zum Schaffen eines gleichmäßigen Temperaturfeldes variiert werden.

Zum weiteren Verringern von Strominhomogenitäten innerhalb eines jeden Segments kann die Anzahl an Segmenten erhöht werden. Sinnvollerweise sind jedoch nicht mehr Segmente vorgesehen als der Anzahl von in Reihe geschalteten Zellen entspräche, da jeder Strompfad vorteilhaft durch alle Segmente der Zellen geführt wird. Bei einer höheren Anzahl von Segmenten wäre dies dann nicht mehr möglich. Idealerweise wird ein Strompfad gleich häufig durch jedes Segment der Zellen geführt. Bei einem 40-zelligen Brennstoffzellenstapel ergibt sich somit eine optimale Anzahl von 40, 20, 10, 8, 5, 4 oder 2 Segmenten, in die die Zellen unterteilt sind zusätzlich zu Segmenten, deren Strom durch Verbindungselemente in der Transferplatte zum gleichen Segmenten auf der anderen Seite der Transferplatte geleitet wird (wie z.B. Segment 2 in Figur 10),.

Grundsätzlich ist es aus Kostengründen wünschenswert, die Anzahl der Segmente und die Anzahl der Transferplatten so gering wie möglich zu halten. Die obigen Beispiele zeigen, dass bereits eine erheblich gleichmäßigere Strom- und Temperaturverteilung erreicht werden kann, wenn der Strom nicht in allen Segmenten durch Transferplatten umgeleitet wird, sondern nur durch die Segmente geleitet wird, die ohne Eingriff eine besonders hohe oder besonders niedrige Stromdichte aufweisen. Eine optimale Vergleichmäßigung ist abhängig von den Details des Strömungsfeldes, den jeweiligen Betriebsbedingungen und insbesondere von der Lastdynamik.

Die oben beschriebenen Simulationen zeigen, dass die Größe des Widerstandes der Trennelemente 17, mit dem die Bipolarplatten und anderen Komponenten in elektrisch gegeneinander isolierte Segmente unterteilt werden, für die in den Tabellen 3, 4 und 5, 6 gezeigten Ergebnisse nur eine geringe Rolle spielt. Der Längswiderstand der einzelnen Komponenten wird durch eine sehr große Fläche und sehr geringe Dicke bestimmt, der Querwiderstand dagegen durch eine sehr geringe Fläche und große Länge. Bei üblichen Brennstoffzellenstapel-Bauformen ergeben sich somit sehr große Unterschiede im Hinblick auf den Längs- und den Querwiderstand. Die in den Tabellen 3, 4 und 5, 6 gezeigten Ergebnisse sind mit den tatsächlich zu erwartenden Querwiderständen berechnet und nicht mit einer elektrisch vollständigen Trennung in Segmente. Obgleich der Wegfall der Trennelemente bei ausreichend hohem Querwiderstand im Verhältnis zum Längswiderstand eine deutliche konstruktive Vereinfachung mit sich bringt, bietet die Verwendung von Trennelementen offensichtlich Vorteile, weil damit der Stromfluss von einem Segment in das andere ausschließlich durch die Transferplatte erfolgt und keine parasitären Querströme in anderen Segmenten, insbesondere der elektrisch gut leitenden Bipolarplatte auftreten können. Als Alternative zu Trennelementen kann es sinnvoll sein, für die Bipolarplatte ein Material zu verwenden, das elektrisch anisotrop leitend ist oder gemacht werden kann, so dass der Widerstand in Längsrichtung so niedrig wie möglich ist, in Querrichtung aber erhöht ist und die parasitären Querströme in Bipolarplatten ohne Transferplatte vermindert. Die Anisotropie kann auch in der Längsrichtung der Bipolarplatte vorgesehen sein und z.B. die gewählten Segmentgrenzen nachbilden. Bei der Herstellung einer Bipolarplatte aus Graphit können z.B. entlang der vorgesehenen Segmentgrenzen geringer leitende Plättchen eingebracht werden, die die Querleitfähigkeit lokal stark vermindern ohne die Längsleitfähigkeit ähnlich stark zu vermindern. Bei metallischen Bipolarplatten kann eine entsprechende lokale Veränderung der Leitfähigkeit durch selektiven Materialabtrag oder lokale Materialinhomogenitäten oder Materialveränderungen hergestellt werden.

Bei einer geschickten Gestaltung der Segmente und der Transferplatten ist es auch möglich, die Auswirkungen des Skineffekts und des transienten Skineffekts zu reduzieren, ähnlich wie bei verdrillten Leitern oder dem im Elektromaschinenbau zur Vermeidung von Stromverdrängungseffekten benutzten Roebelstab, der z.B. in der US 1,653,784 A beschrieben ist, und bei der Firma ABB auf deren Internetseite http://www.abb.de. Zumindest ein Segment wird vorteilhaft etwa in der Mitte einer Zelle angeordnet, umgeben von anderen Segmenten. Die Strompfade durch den Brennstoffzellenstapel werden durch Transferplatten so geleitet, dass jeder Strompfad sowohl durch Segmente am Außenrand als auch durch das oder die Segmente im Inneren des Stapels führt.

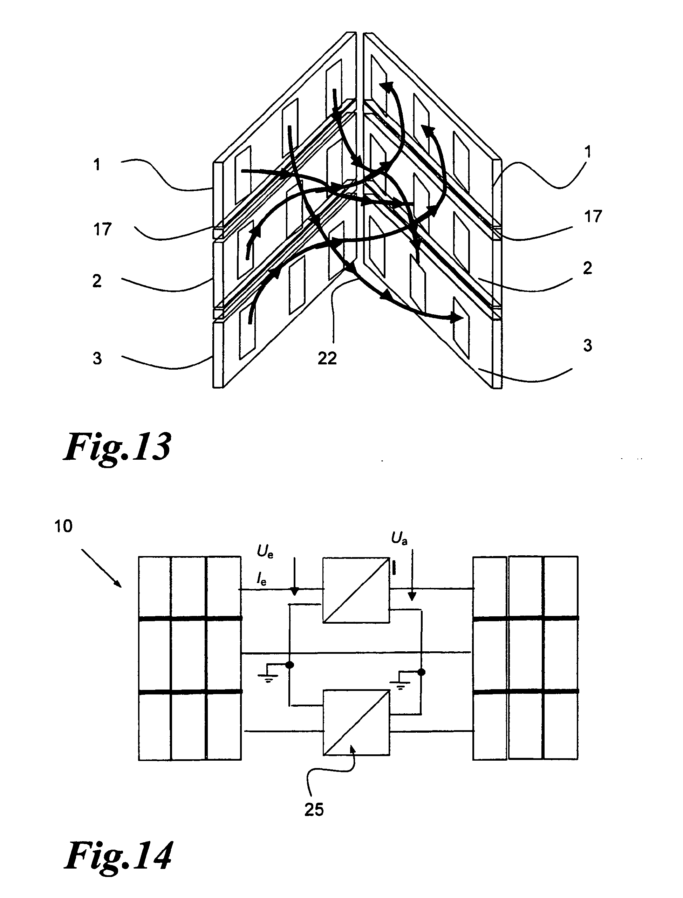

Um sicherzustellen, dass auch in Teilbereichen des Brennstoffzellenstapels sich kein transienter Skineffekt ausbildet, empfiehlt es sich, den Strompfad relativ häufig von einem äußeren zu einem inneren Segment zu leiten. Eine Ausführungsform hiervon zeigt Figur 13. Hier werden die Strompfade vertauscht, wobei zur besseren Übersichtlichkeit nicht alle Verbindungselemente zwischen den Teilstücken auf beiden Seiten der Transferplatte in Figur 13 dargestellt sind. Zur optimalen Anpassung an einen jeweiligen Anwendungsfall kann eine Varianz bezüglich der gewählten Materialeigenschaften, wie der Permeabilität, insbesondere von nickel- oder eisenhaltigen Stählen, der Dicke jeder Zelle, der Zellenzahl und des bei Schaltvorgängen auftretenden Stromgradienten vorgenommen werden. Der transiente Skineffekt hängt ferner von der elektrischen Leitfähigkeit senkrecht zur hauptsächlichen Stromrichtung ab. Diese Leitfähigkeit kann durch die Verwendung von anisotrop leitenden Materialien zur Herstellung der Bipolarplatten, so wie oben bereits beschrieben, reduziert werden.

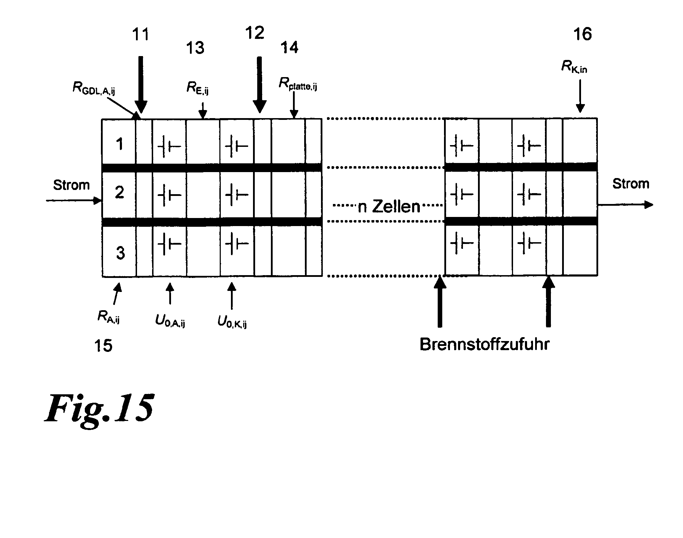

Alternativ zu dem vorstehend geschilderten Vorsehen einer Transferplatte oder ggf. auch zusätzlich zu dieser kann die Stromdichteverteilung auch dadurch verändert werden, dass die Zufuhr von Brennstoff zu den einzelnen Zellen eines Brennstoffzellenstapels zu unterschiedlichen Segmenten erfolgt. In Figur 15 wird die in Figur 3 bereits gezeigte schematische Darstellung eines Brennstoffzellenstapels gezeigt, wobei die Brennstoffzufuhr auf der einen Seite des Stapels in das Segment 1 führt, von dort in das Segment 2 und dann Segment 3 und von dort zum Abgas des Brennstoffzellenstapels, während die Brennstoffzufuhr auf der anderen Seite des Stapels oder in der nächsten Zelle in das Segment 3, von dort in das Segment 2 und dann Segment 1 und von dort zum Abgas des Brennstoffzellenstapels. Die erfindungsgemäße Trennung von Komponenten des Brennstoffzellenstapels in Segmente durch nicht leitende Trennelemente oder die geringe Querleitfähigkeit der Komponenten führt zu elektrisch äquivalenten Strompfaden. Wenn bei einem Stapel mit n Zellen die Brennstoffzufuhr bei den ersten n/2 Zellen in das Segment 1 führt und bei den Zellen n/2 +1 bis n in das Segment 3, bzw bei den ersten m Zellen in das Segment 1, bei den zweiten m Zelle in das Segment 3, usw. mit m bevorzugt gleich 1, dann sind die elektrischen Bedingungen des Strompfades 1-3 und 3-1 gleich und es ergibt sich eine entsprechende Stromvergleichmäßigung. Bei mehr Segmenten kann die Brenngaszufuhr statt aus zwei unterschiedlichen Richtungen dann auch aus mehreren Richtungen in vorzugsweise alternierender Reihenfolge durchgeführt und auf jedem Strompfad elektrisch gleiche Bedingungen geschaffe werden. Im Unterschied zum Stand der Technik kann die Zufuhr des Brennstoffs zu den einzelnen Segmenten von Zelle zu Zelle variiert werden. Die Simulationsergebnisse dazu entsprechen qualitativ den in den Tabellen 3 und 4 gezeigten Verbesserungen und werden deshalb an dieser Stelle nicht wiederholt, sondern auf die Tabellen 3 und 4 verwiesen. Statt einer Brenngaszufuhr für Brennstoffzellen gilt das oben gesagte natürlich auch für Reaktanden andere elektrochemischer Energieumwandlungssysteme, wie z.B. Galvanikanlagen und Elektrolyseanlagen.

Die bisherigen Ausführungen haben sich auf elektrochemische Energieumwandlungssysteme in der allgemeinen Form eines Bipolarsystems, insbesondere Brennstoffzellen bezogen. Elektrochemische Energieumwandlungssysteme umfassen in der allgemeinen Form auch eine monopolare Trogzelle, die aus mehreren parallel geschalteten Kathoden und mehreren parallel geschalteten Anoden in einem mit Elektrolyt gefüllten Trog besteht. Die bisherigen Ausführungen gelten hier ebenso, wobei anstelle einer Bipolarplatte mit mindestens zwei Segmenten Polbrücken mit mindestens zwei elektrisch oder durch hohen Querwiderstand getrennten Segmenten verwendet werden, wobei alle Kathoden mit einer Polbrücke und alle Anoden mit einer zweiten Polbrücke verbunden sind.

Alternativ zu dem vorstehend geschilderten Vorsehen einer Transferplatte und/oder einer Zuordnung der Brennstoffszufuhr zu bestimmten Segmenten oder ggf. auch zusätzlich zu diesen kann die Stromdichteverteilung mittels leistungselektronischer Komponenten, wie eines Auf- und/oder Abwärtswandlers, aktiv beeinflusst werden. Ein Beispiel eines Ausschnitts eines Brennstoffzellenstapels mit einem solchen Auf- und Abwärtswandler 25 ist in Figur 14 skizziert. Der Begriff eines Aufwärtswandlers bezieht sich auf die Spannung, da, wenn die Spannung erhöht wird, aufgrund des Erhaltungssatzes und Vernachlässigung der Verluste in der Leistungselektronik der Strom sinkt. Bei einem Abwärtswandler finden die umgekehrten Vorgänge statt, sodass wenn die Spannung sinkt, der Strom erhöht wird. Die Stromdichte in den Segmenten bzw. das Potential der Segmente gegen eine Referenzelektrode, wie im einfachsten Fall einen gemeinsamen Massepunkt, wird gemessen und je nach Optimierungsziel, z.B. maximale Leistung, größte Stromdichte- oder Temperaturhomogenität, maximaler Wirkungsgrad, usw., die Stromdichte und/oder das Potential des jeweiligen Segments mittels leistungselektronischer Komponenten in Form von Stellgliedern auf- oder abwärts gewandelt. Die leistungselektronischen Komponenten bzw. Stellglieder, können entweder zwischen zwei Zellen oder, was konstruktiv einfacher zu realisieren ist, am Anfang und/oder Ende eines Brennstoffzellenstapels angeordnet sein. Im letzteren Fall erweist es sich als hilfreich, wenn ein isolierter Anschluss an den einzelnen Segmenten möglich ist, z.B. durch Segmentieren einer Endplatte, an die die leistungselektronischen Komponenten angeschlossen werden, in elektrisch voneinander isolierte Segmente.

Die Funktionsweise der leistungselektronischen Komponente in einem Brennstoffzellenstapel soll an folgendem Beispiel erläutert werden:

Die Tabellen 1 und 2 zeigen, dass der Strom im Segment 1 höher (38A) und im Segment 3 niedriger (24A) als ein arithmetischer Mittelwert (30A) des Gesamtstroms der drei Segmente ist. Damit eine gleichmäßige Stromverteilung erreicht werden kann, ist es also erforderlich, den Strom im Segment 1 zu verringern und im Segment 3 zu erhöhen. Für den Betrieb der leistungselektronischen Komponente als Aufwärtswandler im Segment 1 wird die Ausgangsspannung von $U_e$ auf $U_a$ erhöht und es gilt:

$$U_a = U_e \frac{T}{T - T_{ein}}$$

wobei $T_{ein}$ die Einschaltdauer einer Spule eines üblichen Hochsetzstellers und $T$ die Dauer der Schaltperiode ist.

Unter der Bedingung $P_{ein} = P_{aus}$ folgt:

$$I_e = I_a \frac{U_a}{U_e} = I_a \frac{T}{T - T_{ein}} .$$

Daraus folgt für das Tastverhältnis des Aufwärtswandlers zur Reduzierung des Stromes in Segment 1:

$$\frac{T_{ein}}{T} = 1 - \frac{I_a}{I_e}$$

Wird als Optimierungsziel eine Stromhomogenisierung angestrebt, ist $I_a$ mit dem arithmetischen Mittelwert gleichzusetzen.

Durch die von dem Aufwärtswandler verursachte Spannungserhöhung ($U_a$ - $U_e$) wird eine Verringerung des Stromes im Segment 1 induziert. Die Verringerung des Stroms im Segment 1 führt dazu, dass im Segment 1 weniger Brennstoff verbraucht wird und mehr Brennstoff in die anderen Segmente strömt. Als Folge hiervon steigen die konzentrationsabhängigen Spannungen in jedem der folgenden Segmente jeder Brennstoffzelle des Stapels an und damit auch der Strom und entsprechend die Leistung. Es ist also durch die Beeinflussung des Stromes in einem einzelnen Segment eine indirekte Beeinflussung der in Strömungsrichtung nachfolgenden Segmente möglich. Durch die Verringerung in einem und Erhöhung des Stromes in einem anderen Segment kommt es zu einer Art "Leistungsverschiebung" von dem einen in ein anderes Segment. Die Wirkung des Aufwärtswandlers in Segment 1 wird damit unterstützt. In entsprechender Weise wird für den Strom in Segment 3 ggf. zusätzlich eine Abwärtswandlung durchgeführt. Der Strom in Segment 2 muss bei einer Drittelung des Brennstoffzellenstapels nicht aktiv beeinflusst werden und stellt sich entsprechend den Kirchhoffschen Gesetzen ein. Selbstverständlich wäre es aber auch möglich, auch in Segment 2 einen Gleichstromsteller zu verwenden, der dann aber anwendungsspezifisch entweder ein Hochsetzsteller oder ein Tiefsetzsteller ist, oder ggf. sogar ein kombinierter Hochsetz-/Tiefsetzsteller sein kann.

Neben den im Vorstehenden beschriebenen und in den Zeichnungen dargestellten Ausführungsformen von elektrochemischen Energieumwandlungssystemen mit elektrisch leitenden Komponenten mit zumindest zwei in Reihe geschalteten Zellen können auch noch weitere vorgesehen werden, bei denen zur Strom- und/oder Temperaturhomogenisierung innerhalb des elektrochemischen Energieumwandlungssystems zumindest eine elektrisch leitende Komponente in zumindest zwei gegeneinander isolierte Segmente unterteilt ist. Ferner kann eine Transferplatte aus einem elektrisch nicht leitfähigen Material mit zumindest zwei elektrisch leitenden Teilstücken oder Bereichen auf beiden Seiten vorgesehen sein, um den Strom von einem Segment in ein anderes zu leiten. Alternativ oder zusätzlich kann zur Stromhomogenisierung eine segmentspezifische Brennstoffzufuhr und/oder zumindest eine leistungselektronische Komponente vorgesehen sein.

Bezugszeichenliste

| 1 | erstes Segment |
| 2 | zweites Segment |
| 3 | drittes Segment |
| 10 | Brennstoffzellenstapel |
| 11 | Anode |
| 12 | Kathode |
| 13 | Elektrolyt |
| 14 | Bipolarplatte |
| 15 | Anodenendplatte |
| 16 | Kathodenendplatte |
| 17 | Trennelement |
| 18 | Transferplatte |
| 19 | elektrisch leitendes Teilstück |
| 20 | elektrisch leitendes Teilstück |
| 21 | elektrisch leitendes Teilstück |
| 22 | Verbindungselement |
| 23 | Anschlussbereich |
| 24 | Transferplatte |
| 25 | Auf- und/oder Abwärtswandler |

(fortgesetzt)

| 140 | Halbbipolarplatte |
| 141 | Halbbipolarplatte |

**Patentansprüche**

1. Elektrochemisches Energieumwandlungssystem (10) mit zumindest einer elektrisch leitenden Komponente (11,12,13,14) mit zumindest zwei in Reihe geschalteten Zellen,
   **dadurch gekennzeichnet, dass**
   zum Homogenisieren des Stromflusses innerhalb des elektrochemischen Energieumwandlungssystems (10) und der Stromdichteverteilung in den elektrisch leitenden Komponenten zumindest eine der elektrisch leitenden Komponenten (11,12,13,14) in zumindest zwei elektrisch gegeneinander isolierte Segmente (1,2,3) unterteilt ist und zumindest eine Transferplatte (18,24), bestehend aus elektrisch nicht leitfähigem Material mit zumindest zwei leitenden Teilstücken (19,20,21) und/oder Bereichen (23), vorgesehen ist zum Leiten eines Stroms von zumindest einem Segment zu zumindest einem anderen Segment.

2. Elektrochemisches Energieumwandlungssystem (10) nach Anspruch 1,
   **dadurch gekennzeichnet, dass**
   die Segmente (1,2,3) unterschiedlich groß ausgebildet sind und von Zelle zu Zelle variierbar sind und/oder zwischen jeweils zwei Segmenten (1,2,3) zumindest ein elektrisch Isolierendes Trennelement (17) vorgesehen ist.

3. Elektrochemisches Energieumwandlungssystem (10) nach Anspruch 1 oder 2,
   **dadurch gekennzeichnet, dass**
   zumindest eine elektrisch leitende Komponente (14) In zumindest zwei über eine Transferplatte (18,24) miteinander elektrisch leitend verbundene Halbkomponenten (140,141) unterteilt ist, insbesondere bei Vorsehen einer Bipolarplatte (14) als elektrisch leitender Komponente die Halbkomponenten Halbbipolarplatten (140,141) sind, Insbesondere die Transferplatte (18,24) zwischen zwei Halbkomponenten (140,141) angeordnet ist.

4. Elektrochemisches Energieumwandlungssystem (10) nach einem der vorstehenden Ansprüche,
   **dadurch gekennzeichnet, dass**
   nur eine elektrisch leitende Komponente, insbesondere eine Bipolarplatte (14) eines Brennstoffzellenstapels oder die Elektroden einer Galvanikanlage, einer elektrometallurgischen Anlage oder einer Elektrolyseanlage, elektrisch in Segmente (1,2,3) unterteilt ist und/oder dass eine elektrisch leitende Komponente, insbesondere eine Bipolarplatte (14) eines Brennstoffzellenstapels oder die Elektroden einer Galvanikanlage, einer elektrometallurgischen Anlage oder einer Elektrolyseanlage, aus einem elektrisch anisotrop leitenden Material besteht, insbesondere die elektrisch leitende Komponente aus einem Material besteht, dessen elektrische Leitfähigkeit in Richtung senkrecht zur Fläche hoch und in den anderen Richtungen demgegenüber geringer ist, insbesondere die spezifische Leitfähigkeit in Längsrichtung mindestens doppelt so hoch ist wie in Querrichtung.

5. Elektrochemisches Energieumwandlungssystem (10) nach einem der Ansprüche 2 bis 4,
   **dadurch gekennzeichnet, dass**
   die elektrisch leitenden Teilstücke (19,20,21) und/oder Bereiche (23) der Transferplatte (18,24) ohne elektrische Trennung voneinander vorgesehen sind und der Quenrviderstand ein Trennelement zwischen den elektrisch leitenden Teilstücken und/oder Bereichen bildet und/oder bei einer Bipolarplatte (14) als Trennelement der Querwiderstand der Bipolarplatte im Verhältnis zum Längswiderstand um einen Faktor von mehr als $10^2$ größer ist, insbesondere oder dass die Anisotropie der elektrischen Leitfähigkeit der elektrisch leitenden Komponente, insbesondere einer Bipolarplatte (14), eine Vorzugsrichtung aufweist, so dass die Querleitfähigkeit zwischen einzelnen Segmenten (1,2,3) mindestens halbiert wird und/oder dass zum Vermeiden eines transienten Skineffekts die spezifische Querleitfähigkeit der elektrisch leitenden Komponente, insbesondere einer Bipolarplatte (14), in radialer Richtung von ihrer Mitte aus um mindestens den Faktor 4 gegenüber der Längsleitfähigkeit abnimmt.

6. Elektrochemisches Energieumwandlungssystem (10) nach einem der vorstehenden Ansprüche,
   **dadurch gekennzeichnet, dass**
   die elektrisch leitenden Teilstücke (19,20,21) der Transferplatte (18,24) elektrisch voneinander getrennt sind und/oder der nicht leitende Grundkörper der Transferplatte (16,24) zum Teil als luft- oder brenngasgefüllter Hohlkörper ausgebildet ist.

**7.** Elektrochemisches Energieumwandlungssystem (10) nach einem der vorstehenden Ansprüche,
**dadurch gekennzeichnet, dass**
Verbindungselemente (22) zwischen den elektrisch leitenden Teilstücken (19,20,21) und/oder Bereichen (23) der Transferplatte (18,24) vorgesehen und gegeneinander isoliert sind, insbesondere die Verbindungselemente (22) im Wesentlichen flache mit den leitenden Teilstücken (19,20,21) und/oder Bereichen (23) der Transferplatte (18,24) verbundene Elemente mit ähnlichem oder identischen Widerstand sind, insbesondere die Verbindungselemente Kabel (22) sind und/oder dass die Verbindungselemente (22) außerhalb der Transferplatte (18,24) angeordnet sind, um Strom von einem Segment (1,2,3) zu einem anderen zu leiten.

**8.** Elektrochemisches Energieumwandlungssystem (10) nach Anspruch 7,
**dadurch gekennzeichnet, dass**
die Verbindungselemente (22) im elektrischen Schwerpunkt der Teilstücke befestigt oder an einer Stelle angeordnet sind, an der zwischen den miteinander verbundenen Teilstücken unter Berücksichtigung des Widerstands der Teilstücke die Stromdichte mit geringstem Widerstand weitergeleitet wird oder dass die Verbindungselemente (22) an vorgebbaren Stellen an oder auf der Transferplatte (18,24) befestigbar oder befestigt sind.

**9.** Elektrochemisches Energieumwandlungssystem (10) nach einem der vorstehenden Ansprüche,
**dadurch gekennzeichnet, dass**
zumindest ein Segment (2) von allen anderen Segmenten (1,3) umgeben ist, insbesondere eine Verbindung zum Leiten von Strom zwischen den Segmenten sowohl zwischen äußeren (1,3) als auch inneren Segmenten (2) vorgesehen ist.

**10.** Elektrochemisches Energieumwandlungssystem (10) nach einem der vorstehenden Ansprüche,
**dadurch gekennzeichnet, dass**
die Transferplatte (18,24) mit zumindest einer Bipolarplatte (14) zusammen eine konstruktive Einheit bildet und/oder dass eine Bipolarplatte so ausgebildet ist, dass sie die Funktion der Transferplatte umfasst oder übernimmt.

**11.** Elektrochemisches Energieumwandlungssystem (10) nach dem Oberbegriff des Anspruchs 1 oder nach einem der vorstehenden Ansprüche,
**dadurch gekennzeichnet, dass**
zum Homogenisieren des Stroms und zum Beeinflussen der Stromdichteverteilung innerhalb des elektrochemischen Energieumwandlungssystems (10) zumindest eine leistungselektronische Komponente (25) und eine Referenzelektrode oder ein Referenzsegment vorgesehen sind, wobei die Stromdichte in Segmenten der elektrisch leitenden Komponenten (11,12,13,14) gegen die Referenzelektrode oder den Strom in dem Referenzsegment gemessen und je nach Optimierungsziel die Stromdichte oder das Potential des jeweiligen Segments mittels der leistungselektronischen Komponente (25) auf- oder abwärts gewandelt wird, insbesondere die leistungselektronische Komponente (25) in zumindest einen Strompfad der Segmente (1,2,3) der elektrisch leitenden Komponenten (11,12,13,14) integriert oder integrierbar ist und/oder dass die leistungselektronische Komponente (25) die aufgenommene Leistung an zumindest eine elektronische Komponente zwischen Segmenten (1,2,3) weiterleitet und/oder für den Betrieb von Hilfsaggregaten bereitstellt.

**12.** Elektrochemisches Energieumwandlungssystem (10) nach einem der vorstehenden Ansprüche,
**dadurch gekennzeichnet, dass**
die Transferplatte zwischen zwei Teilen eines elektrochemischen Energieumwandlungssystems, insbesondere Stapeln einer Brennstoffzelle, angeordnet ist und statt einer Halbbipolarplatte mit Trennelementen Endplatten mit Trennelementen oder Polbrücken mit Trennelementen vorgesehen sind, insbesondere elektrisch isolierende oder durch Querwiderstand gebildete Trennelemente, und/oder dass eine in elektrisch voneinander getrennte Segmente aufgeteilte Endplatte (15,16) des elektrochemischen Energieumwandlungssystems (10) vorgesehen ist, insbesondere bei einem Brennstoffzellenstapel die leistungselektronische Komponente (25) auf der dem Brennstoffzellenstapel abgewandten Seite der Endplatte angeordnet ist.

**13.** Elektrochemisches Energieumwandlungssystem (10) nach einem der vorstehenden Ansprüche,
**dadurch gekennzeichnet, dass**
eine Brennstoff- oder Reaktandenzufuhr bei einem elektrochemischen Energieumwandlungssystem in Form einer Brennstoffzelle zu den Zellen zu unterschiedlichen Segmenten in unterschiedlicher Reihenfolge erfolgt.

**14.** Transferplatte (18,24) für ein elektrochemisches Energieumwandlungssystem (10) nach einem der vorstehenden Ansprüche,

**dadurch gekennzeichnet, dass**
die Transferplatte (18,24) aus elektrisch nicht leitfähigem Material besteht und zumindest zwei elektrisch leitende Teilstücke (19,20,21) und/oder Bereiche (23) aufweist, welche zum Leiten eines Stroms von zumindest einem wie im Anspruch 1 vordefinierten Segment (1,2,3) zu zumindest einem anderen Segment (1,2,3) vorgesehen sind, so dass der Stromfluss innerhalb des elektrochemischen Energieumwandlungssystems (10) und die Stromdichteverteilung in den wie in Anspruch 1 vordefinierten elektrisch leitenden Komponenten (11,12,13,14) homogenisiert wird.

15. Transferplatte (18,24) nach Anspruch 14,
**dadurch gekennzeichnet, dass**
die zumindest zwei elektrisch leitenden Teilstücke (19,20,21) und/oder Bereiche auf beiden Seiten der Transferplatte vorgesehen sind, insbesondere Verbindungselemente (22) vorgesehen sind, die die Teilstücke (19,20,21) und/oder Bereiche miteinander verbinden.

**Claims**

1. Electrochemical energy conversion system (10) with at least one electrically conducting component (11,12,13,14) with at least two in series connected cells,
**characterized by**
at least one of the electrically conducting components (11,12,13,14) being divided into at least two segments (1,2,3), which are electrically isolated against each other, and that at least one transfer plate (18,24) is provided consisting of electrically non-conducting material with at least two conducting sections (19,20,21) and/or areas (23) for conducting current from at least one segment to at least one other segment in order to create a homogeneous current flow within the electrochemical energy conversion system (10) and current density distribution in the electrically conducting components.

2. Electrochemical energy conversion system (10) according to claim 1,
**characterized by**
that the segments (1,2,3) have different sizes and their size is variable between one cell and another, and/or that between each of the segments (1,2,3) at least one electrically isolating separating element (17) is provided.

3. Electrochemical energy conversion system (10) according to claim 1 or 2,
**characterized by**
that at least one electrically conducting component (14) is divided into at least two half components (140,141) which are connected electrically conducting via a transfer plate (18,24) with each other, in particular that the half components are half bipolar plates (140,141) when choosing a bipolar plate (14) as electrically conducting component, and in particular that the transfer plate (18,24) is positioned between two half components (140,141).

4. Electrochemical energy conversion system (10) according to one of the preceding claims,
**characterized by**
that only one electrically conducting component, in particular a bipolar plate (14) of a fuel cell stack or the electrodes of a galvanic plant, an electrometallurgical plant or an electrolyser, is divided electrically into segments (1,2,3) and/or that an electrically conducting component, in particular a bipolar plate (14) of a fuel cell stack or the electrodes of a galvanic plant, an electrometallurgical plant or an electrolyser, consists of an electrically anisotropic conducting material, in particular that the electrically conducting component consisting of a material whose electrical conductivity in the direction vertical to the area is high and in the other directions in comparison lower, and in particular that the specific conductivity in the longitudinal direction of current flow is at least double of that in the transverse direction.

5. Electrochemical energy conversion system (10) according to one of the claims 2 to 4,
**characterized by**
that the electrically conducting sections (19,20,21) and/or areas (23) of the transfer plate (18,24) are designed without electrical separation from one another and that the lateral resistance forms a separating element between the electrically conducting sections and/or areas, and/or, when using a bipolar plate (14) as separating element, that the lateral resistance of the bipolar plate is in relation to the longitudinal resistance greater by a factor of more than $10^2$, in particular or that the anisotropy of the electrical conductivity of the electrically conducting component, in particular a bipolar plate (14), has a preferential direction so that the lateral conductivity between the individual segments (1,2,3) is at least halved, and/or that the specific lateral conductivity of the electrically conducting component, in particular a bipolar plate (14), decreases in radial direction starting from the middle by at least a factor 4 compared to the longitudinal conductivity in order to avoid a transient skin effect.

**6.** Electrochemical energy conversion system (10) according to one of the preceding claims,
**characterized by**
that the electrically conducting sections (19,20,21) of the transfer plate (18,24) are electrically separated from each other and/or that the non conducting base body of the transfer plate (18,24) is designed partly as an air or fuel gas filled hollow body.

**7.** Electrochemical energy conversion system (10) according to one of the preceding claims,
**characterized by**
that connecting elements (22), which are isolated against each other, are provided between the electrically conducting sections (19,20,21) and/or areas (23) of the transfer plate (18,24), in particular that the connecting elements (22) are essentially flat elements with similar or identical resistance connected with the conducting sections (19,20,21) and/or areas (23) of the transfer plate (18,24), and in particular that the connecting elements are cables (22) and/or that the connecting elements (22) are arranged outside of the transfer plate (18,24), in order to conduct current from one segment (1,2,3) to another.

**8.** Electrochemical energy conversion system (10) according to claim 7,
**characterized by**
that the connecting elements (22) are connected to the electrical centre of the sections or positioned at a place, from which the current density can be passed on with lowest resistance between the sections, which are connected to one another, taking the resistance of the sections themselves into account, or that the connecting elements (22) can be or are fastened to predefined locations at or on the transfer plate (18,24).

**9.** Electrochemical energy conversion system (10) according to one of the preceding claims,
**characterized by**
that at least one segment (2) is surrounded by all other segments (1,3), in particular that a connection for conducting current between the segments is provided both between the outer segments (1,3) as well as the inner segments (2).

**10.** Electrochemical energy conversion system (10) according to one of the preceding claims,
**characterized by**
that the transfer plate (18,24) forms together with at least one bipolar plate (14) together an integrally designed unit and/or that a bipolar plate is designed in such a way that it incorporates or takes over the function of the transfer plate.

**11.** Electrochemical energy conversion system (10) according to the preamble of claim 1 or one of the preceding claims,
**characterized by**
that, in order to create a more homogeneous current or to influence the current density distribution within the electrochemical energy conversion system (10), at least one power electronic component (25) and a reference electrode or a reference segment are provided, wherein the current density in segments of the electrically conducting components (11,12,13,14) is measured against the reference electrode or the current in the reference segment, and, depending on the optimization objectives, the current density or potential of the respective segment are converted upwards or downwards by means of the power electronics component (25), and in particular that the power electronics component (25) is integrated or can be integrated into at least one current path of the segments (1,2,3) of the electrically conducting components (11,12,13,14), and/or that the power electronics component (25) can pass on the power that it has taken up to at least one electronic component between the segments (1,2,3) and/or make the power available for the operation of auxiliary units.

**12.** Electrochemical energy conversion system (10) according to one of the preceding claims,
**characterized by**
that the transfer plate is placed between two parts of an electrochemical conversion system, in particular stacks of a fuel cell system, and that, instead of half bipolar plates, end plates with separating elements or groupbars with separating elements are provided, in particular electrically isolating separating elements or separating elements formed by the lateral resistance, and/or that an end plate (15,16) of the electrochemical energy conversion system (10) is provided which is divided into segments which are electrically separated from another, and in particular for a fuel cell stack that the power electronics component (25) is positioned on that side of the endplate which is opposite to the fuel cell stack.

**13.** Electrochemical energy conversion system (10) according to one of the preceding claims,

**characterized by**
the supply of fuel or reactands to an electrochemical energy conversion system in the form of a fuel cell being fed to the cells to different segments in different sequence.

14. Transfer plate (18,24) for an electrochemical energy conversion system (10) according to one of the above claims, **characterized by**
the transfer plate (18,24) consisting of electrically non-conducting material and having at least two electrically conducting sections (19,20,21) and/or areas (23) which are provided for conducting current from at least one segment (1,2,3) as predefined in claim 1 to at least one other segment (1,2,3) in order to create a homogenous current flow within the electrochemical energy conversion system (10) and current density distribution in the electrically conducting components (11,12,13,14) as predefined in claim 1.

15. Transfer plate (18,24) according to claim 14, **characterized by**
at least two electrically conducting sections (19,20,21) and/or areas being provided on both sides of the transfer plate, in particular that connecting elements (22) are provided which connect the sections (19,20,21) and/or areas with each other.

**Revendications**

1. Système de conversion d'énergie électrochimique (10) comprenant au moins un composant électriquement conducteur (11, 12, 13, 14) ayant au moins deux cellules montées en série, **caractérisé en ce que**
pour homogénéiser la circulation du courant à l'intérieur du système de conversion d'énergie électrochimique (10) et la répartition de la densité du courant dans les composants électriquement conducteurs, au moins un des composants électriquement conducteurs (11, 12, 13, 14) est subdivisé en au moins deux segments (1, 2, 3) électriquement isolés l'un vis-à-vis de l'autre et au moins une plaqué de transfert (18, 24), constituée d'un matériau électriquement non conducteur et ayant au moins deux pièces (19, 20, 21) et/ou zones (23) conductrices, est prévue pour la conduction d'un courant d'au moins un segment à au moins un autre segment.

2. Système de conversion d'énergie électrochimique (10) selon la revendication 1, **caractérisé en ce que** les segments (1, 2, 3) sont formés en différentes tailles et sont variables de cellules en cellules et/ou au moins un élément séparateur électriquement isolant (17) est prévu entre les deux segments (1, 2, 3) respectivement.

3. Système de conversion d'énergie électrochimique (10) selon la revendication 1 ou 2, **caractérisé en ce que**
au moins un composant électriquement conducteur (14) est subdivisé en au moins deux semi-composants (140, 141), liés l'un à l'autre de manière électriquement conductrice par le biais d'une plaque de transfert (18, 24), en particulier quand on prévoit une plaque bipolaire (14) comme composant électriquement conducteur, les semi-composants sont des plaques semi-bipolaires (140, 141), en particulier la plaque de transfert (18, 24) est disposée entre deux semi-composants (140, 141).

4. Système de conversion d'énergie électrochimique (10) selon l'une des revendications précédentes, **caractérisé en ce que**
seul un composant électriquement conducteur, en particulier une plaque bipolaire (14) d'un empilement de cellules à combustibles ou les électrodes d'un dispositif galvanique, d'un dispositif électrométallurgique ou d'un dispositif d'électrolyse, est subdivisé électriquement en segments (1, 2, 3) et/ou **en ce qu'**un composant électriquement conducteur, en particulier une plaque bipolaire (14) d'un empilement de cellules à combustibles ou les électrodes d'un dispositif galvanique, d'un dispositif électrométallurgique ou d'un dispositif d'électrolyse, se compose d'un matériau électriquement conducteur anisotrope, en particulier le composant électriquement conducteur se compose d'un matériau dont la conductivité électrique dans la direction perpendiculaire à la surface est élevée et en revanche faible dans les autres directions, en particulier, la conductivité spécifique dans la direction longitudinale est au moins deux fois aussi élevée que dans la direction transversale.

5. Système de conversion d'énergie électrochimique (10) selon l'une des revendications 2 à 4, **caractérisé en ce que** les pièces (19, 20, 21) et/ou zones (23) électriquement conductrices de la plaque de transfert (18, 24) sont prévues sans séparation électrique entre elles et la résistance transversale constitue un élément séparateur entre les pièces et/ou zones électriquement conductrices et/ou en cas de plaque bipolaire (14) comme élément séparateur, la résistance transversale de la plaque bipolaire est supérieure d'un facteur de plus de $10^2$ à la résistance longitudinale, notamment ou **en ce que** l'anisotropie de la conductivité électrique du composant électriquement conducteur, en particulier d'une plaque bipolaire (14), présente une direction préférée de sorte que la conductivité transversale soit au moins de la moitié entre les segments individuels (1, 2, 3) et/ou **en ce que**, pour éviter un effet de peau transitoire, la conductivité transversale spécifique du composant électriquement conducteur, en particulier d'une plaque bipolaire (14), diminue dans la direction radiale en partant de son milieu d'au moins 4 fois par rapport à la conductivité longitudinale.

6. Système de conversion d'énergie électrochimique (10) selon l'une des revendications précédentes, **caractérisé en ce que**
les pièces (19, 20, 21) électriquement conductrices de la plaque de transfert (18, 24) sont séparées les unes des autres électriquement et/ou le corps de base non conducteur de la plaque de transfert (18, 24) est constitué partiellement sous la forme d'un corps creux rempli d'air ou de gaz de combustion.

7. Système de conversion d'énergie électrochimique (10) selon l'une des revendications précédentes, **caractérisé en ce que**
des éléments de liaison (22) sont prévus entre les pièces (19, 20, 21) et/ou zones (23) électriquement conductrices de la plaque de transfert (18, 24) et isolés les uns vis-à-vis des autres, en particulier les éléments de liaison (22) sont des éléments sensiblement plats, reliés aux pièces (19, 20, 21) et/ou zones (23) conductrices de la plaque de transfert (18, 24) et ayant une résistance similaire ou identique, en particulier, les éléments de liaison sont des câbles (22) et/ou **en ce que** les éléments de liaison (22) sont disposés à l'extérieur de la plaque de transfert (18, 24) pour conduire le courant d'un segment (1, 2, 3) à un autre.

8. Système de conversion d'énergie électrochimique (10) selon la revendication 7, **caractérisé en ce que**
les éléments de liaison (22) sont fixés au centre électrique des pièces ou à un endroit où la densité de courant ayant la résistance la plus faible est transférée entre les pièces reliées entre elles compte tenu de la résistance des pièces, ou **en ce que** les éléments de liaison (22) peuvent être fixés ou sont fixés à des endroits prédéterminés sur la plaque de transfert (18, 24).

9. Système de conversion d'énergie électrochimique (10) selon l'une des revendications précédentes, **caractérisé en ce que**
au moins un segment (2) est entouré par tous les autres segments (1, 3), une liaison pour la conduction du courant entre les segments, aussi bien entre les segments externes (1, 3) qu'internes (2), est notamment prévue.

10. Système de conversion d'énergie électrochimique (10) selon l'une des revendications précédentes, **caractérisé en ce que**
la plaque de transfert (18, 24) forme conjointement avec au moins une plaque bipolaire (14) une unité de construction et/ou **en ce qu'**une plaque bipolaire est formée de manière à comprendre ou assurer la fonction de la plaque de transfert.

11. Système de conversion d'énergie électrochimique (10) selon le préambule de la revendication 1 ou selon l'une des revendications précédéntes, **caractérisé en ce que**
pour homogénéiser le courant et pour influencer la répartition de la densité du courant à l'intérieur du système de conversion d'énergie électrochimique (10), au moins un composant électronique de puissance (25) et une électrode de référence ou un segment de référence sont prévus, la densité de courant dans les segments des composants électriquement conducteurs (11, 12, 13, 14) étant mesurée par rapport à l'électrode de référence ou au courant dans le segment de référence et, en fonction de l'objectif de l'optimisation, la densité de courant ou le potentiel de chaque segment étant transformé en amont ou en aval au moyen du composant électronique de puissance (25), en particulier le composant électronique de puissance (25) étant intégré ou pouvant être intégré dans au moins un chemin de courant des segments (1, 2, 3) des composants électriquement conducteurs (11, 12, 13, 14) et/ou **en ce que** le composant électronique de puissance (25) transfère à au moins un composant électronique situé entre les segments (1, 2, 3) la puissance absorbée et/ou la met à disposition pour le fonctionnement de groupes secondaires.

12. Système de conversion d'énergie électrochimique (10) selon l'une des revendications précédentes, **caractérisé en ce que**
la plaque de transfert est disposée entre deux parties d'un système de conversion d'énergie électrochimique, en particulier des empilements d'une cellule à combustible, et à la place d'une plaque semi-bipolaire ayant des éléments séparateurs, des plaques terminales comprenant des éléments séparateurs ou des ponts à pôles comprenant des éléments séparateurs sont prévus, notamment des éléments séparateurs électriquement isolants ou formés par la résistance transversale, et/ou **en ce qu'**une plaque terminale (15, 16), divisée en segments électriquement séparés les uns des autres, du système de conversion d'énergie électrochimique (10) est prévue, dans le cas d'un empilement de cellules à combustible notamment, le composant électronique de puissance (25) est disposé sur la face de la plaque terminale faisant dos à l'empilement de cellules à combustible.

13. Système de conversion d'énergie électrochimique (10) selon l'une des revendications précédentes, **caractérisé en ce que**
une amenée de combustible ou de réactif s'effectue, dans le cas d'un système de conversion d'énergie électrochimique prenant la forme d'une cellule à combustible, aux cellules à différents segments dans un ordre différent.

14. Plaque de transfert (18, 24) pour un système de conversion d'énergie électrochimique (10) selon l'une des revendications précédentes, **caractérisé en ce que**
la plaque de transfert (18, 24) se compose d'un matériau électriquement non conducteur et d'au moins deux pièces (19, 20, 21) et/ou zones (23) électriquement conductrices qui sont prévues pour la conduction d'un courant d'au moins un segment (1, 2, 3) prédéfini dans la revendication 1 à au moins un autre segment (1, 2, 3) si bien que la circulation du courant à l'intérieur du système de conversion d'énergie électrochimique (10) et la répartition de la densité du courant dans les composants électriquement conducteurs (11, 12, 13, 14) prédéfinis comme dans la revendication 1 sont homogénéisées.

15. Plaque de transfert (18, 24) selon la revendication 14, **caractérisée en ce que**
les au moins deux pièces (19, 20, 21) et/ou zones électriquement conductrices sont prévues sur les deux faces de la plaque de transfert, en particulier des éléments de liaison (22) sont prévus, qui relient les pièces (19, 20, 21) et/ou zones entre elles.

## 10

**Fig.1**

**Fig.2**

**Fig.3**

**Fig.4**

**Fig.5**

**Fig.6**

18

23

19

22

19

20

20

21

21

**_Fig.7_**

18

19

19

22

20

20

21

21

**_Fig.8_**

**Fig.9**

**Fig.10**

*Fig.11*

*Fig.12*

**Fig.13**

**Fig.14**

**Fig.15**

## IN DER BESCHREIBUNG AUFGEFÜHRTE DOKUMENTE

**In der Beschreibung aufgeführte Patentdokumente**

- DE 102004014493 A1
- DE 10323644 A1
- DE 10392974 T5
- DE 102005002174 A1
- DE 102004016318 A1
- DE 112005001970 T5
- DE 102004014114 A1
- DE 102004026134 B4
- DE 102006017064 A1
- DE 10151601 A1
- DE 10109151 A1
- US 1653784 A

**In der Beschreibung aufgeführte Nicht-Patentliteratur**

- **SAUER ; SANDERS.** *Ortsaufgelöste Strom-, Temperatur- und Potentialmessung und Modellierung in BZ als Basis für Alterungsmodelle, Workshop Lebensdauerprognose von Brennstoffzellen,* 2007
- **FREUNBERGER ; REUM ; EVERTZ ; WOKAUN ; BÜCHI.** Measuring the current distribution in PEFCs with Sub-Millimeter resolution. *Journal of the Electrochemical Society,* 2006, 153
- **BRETT ; ATKINS ; N.P. BRANDON ; VASILEIADIS ; VESOVIC, A.R. KUCERNAK.** Membrane resistance and current distribution measurements under various operating conditions in a polymer electrolyte fuel cell. *Journal of Power Sources,* 2007, 172
- **JOHNSON, GEMMEN.** Effect of load transients on SOFC operation - current reversal on loss of load. *Power Sources,* 2005, 144
- **HANNAKAM.** *Berechnung der transienten Stromverteilung in einem zylindrischen Massivleiter,* 1970
- Verhalten von Batterien bei impulsförmigen Strombelastungen unter Berücksichtigung des Skineffekts. *Dissertation Institut für Elektrische Energietechnik,* 2007